Europäisches Patentamt

European Patent Office

Office européen des brevets

(19)

(11) **EP 1 489 848 A1**

(12) **EUROPEAN PATENT APPLICATION**
published in accordance with Art. 158(3) EPC

(43) Date of publication:
**22.12.2004 Bulletin 2004/52**

(51) Int Cl.⁷: **H04N 7/32**

(21) Application number: **03708606.3**

(86) International application number:
**PCT/JP2003/003060**

(22) Date of filing: **14.03.2003**

(87) International publication number:
**WO 2003/077567 (18.09.2003 Gazette 2003/38)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **14.03.2002 JP 2002070046
07.05.2002 US 377955 P
15.11.2002 JP 2002332846**

(71) Applicant: **MATSUSHITA ELECTRIC INDUSTRIAL
CO., LTD.
Kadoma-shi, Osaka 571-8501 (JP)**

(72) Inventors:
• **HAGAI, Makoto
Moriguchi-shi, Osaka 570-0051 (JP)**
• **KADONO, Shinya
Nishinomiya-shi, Hyogo 663-8113 (JP)**
• **KONDO, Satoshi
Yawata-shi, Kyoto 614-8361 (JP)**

(74) Representative: **Eisenführ, Speiser & Partner
Patentanwälte Rechtsanwälte
Postfach 10 60 78
28060 Bremen (DE)**

(54) **MOTION VECTOR DETECTION METHOD**

(57)  The present invention includes the following steps: a step of generating a first motion vector candidate MVC1 based on a reference frame Rf1 and a second motion vector candidate MVC2 based on a second reference frame Rf2 (S300); a step of generating an interpolation predictive block PB0 by performing interpolation on each pixel value of each pixel in a block PB1 for prediction, indicated by the first motion vector candidate MVC1 and each pixel value of each pixel in a block PB2 for prediction indicated by the second motion vector candidate MVC2 (S302, S304); a step of calculating a prediction error evaluation value based on a differential between each pixel value in the interpolation predictive block PB0 and each pixel value in a current block to be coded (S306~S310); and a step of estimating, for the current block, the first motion vector candidate MVC1 and the second motion vector candidate MVC2, based on which the smallest prediction error evaluation value is obtained, respectively as a motion vector MV1 and a motion vector MV2 (S312, S314).

Fig. 14

```
                    ┌───────┐
                    │ Start │
                    └───┬───┘
    ┌──────────────────▼──────────────────┐
    │  Generate first motion vector        │
    │  candidate MVC1 and second           ├─ S300
    │  motion vector candidate MVC2        │
    └──────────────────┬──────────────────┘
    ┌──────────────────▼──────────────────┐
    │  Obtain predictive blocks            ├─ S302
    │  PB1 and PB2                         │
    └──────────────────┬──────────────────┘
    ┌──────────────────▼──────────────────┐
    │  Generate interpolation predictive   ├─ S304
    │  block PB0 through interpolation      │
    │  processing                          │
    └──────────────────┬──────────────────┘
    ┌──────────────────▼──────────────────┐
    │  Obtain current block                ├─ S306
    └──────────────────┬──────────────────┘
    ┌──────────────────▼──────────────────┐
    │  Current block −                     │
    │  interpolation predictive block PB0  ├─ S308
    │  =Prediction error block RB0         │
    └──────────────────┬──────────────────┘
    ┌──────────────────▼──────────────────┐
    │  Calculate prediction error          ├─ S310
    │  evaluation value                    │
    └──────────────────┬──────────────────┘
         N     ┌───────▼───────┐           S312
    ◄──────────┤ Calculated for all the    │
               │ combinations made of      │
               │ MVC1 and MVC2             │
               └───────┬───────┘
                       │ Y
    ┌──────────────────▼──────────────────┐
    │  Determine MVC1 and MVC2             │
    │  based on which prediction error     ├─ S314
    │  evaluation value is the smallest    │
    │  as MV1 and MV2                      │
    └──────────────────┬──────────────────┘
    ┌──────────────────▼──────────────────┐
    │  Code motion vectors MV1 and         ├─ S316
    │  MV2                                 │
    └──────────────────┬──────────────────┘
                    ┌──▼──┐
                    │ End │
                    └─────┘
```

EP 1 489 848 A1

## Description

## Technical Field

This invention relates to a motion vector estimation method for estimating a motion vector indicating a motion in an area within a picture, when coding a moving picture.

## Background Art

In recent years, along with development of multimedia applications such as video, voice and text, it has become general to handle all sorts of media in an integrated way. However, an information compression technique for data is dispensable for the storage and transmission since a digitalized picture contains an enormous amount of data. On the other hand, a standardization of compression techniques is also important for interoperating compressed picture data. The standards of picture compression techniques include H.261, H.263 of the ITU-T (International Telecommunication Union) and MPEG (Moving Picture Experts Group)-1, MPEG-2 and MPEG-4 of the ISO (International Organization for Standardization) (see reference to "Video Coding for Low Bit Rate Communication" H.263, ITU-T, 1996.3 and "DRAFT FOR 'H. 263++' ANNEXES U, V, AND W TO RECOMMENDATION" H.263 (U.4 Decoder Process), ITU-T, 2000.11).

An inter-frame prediction which involves motion compensation can be cited as an example of a technology shared among these standard motion picture coding methods. In motion compensation based on these moving picture coding methods, an input picture is divided into a predetermined size of rectangle (hereafter referred to as a block) and predictive pixels are generated based on motion vectors respectively indicating a motion between frames for each block.

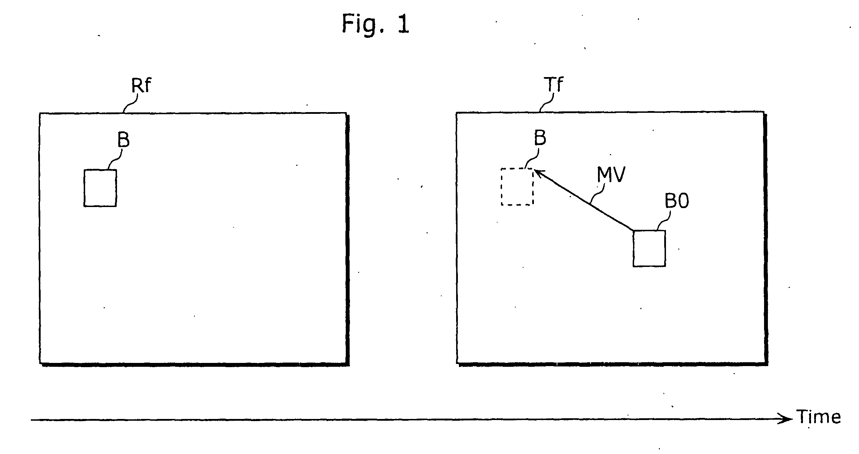

Fig. 1 is an illustration for explaining a motion vector.

For example, when an object having movements is shot with a video camera, a position of a block where the object appears shifts according to each frame. Namely, when the object with movements is contained in a block B of a frame Rf and the object is contained in a block B0 of a frame Tf, it means that the block B0 is displaced from the block B, and the displacement made for the block B0 is presented as a motion vector MV.

Then, in the motion compensation, a motion vector MV is estimated for each block, and the estimation is generally performed by searching for a block, in which pixel values are close to those in a block targeted for estimation (block B0 in Fig. 1), in a frame used as a source of reference (frame Rf in Fig. 1).

Meanwhile, a method of obtaining predictive pixels by pixel interpolating two frames, which are located immediately before a current frame to be coded, as reference frames, is presently under consideration in the H.26L that is under the process of standardization in the ITU. A prediction method for generating a predictive picture (predictive pixels) by pixel interpolating with reference to two frames, each display time preceding that of the current frame is called a forward interpolating prediction.

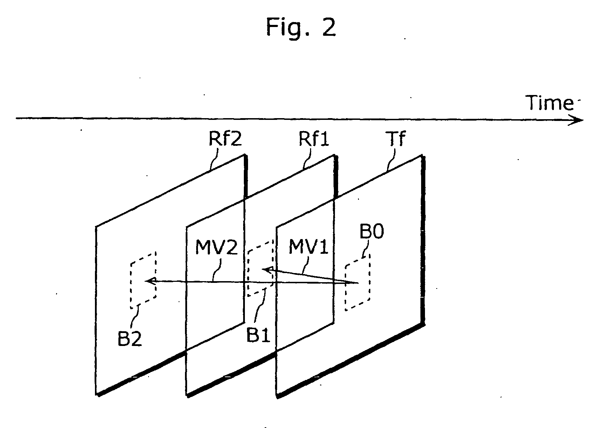

Fig. 2 shows how a predictive image is generated using two frames.

As shown in Fig. 2, when a predictive image is generated for the block B0 in the target frame Tf, for example, a frame Rf1 that is located immediately before the target frame Tf and a reference frame Rf2 that is located two pictures ahead of the target frame, in view of display time, are used as reference frames. This means that blocks B1 and B2, in which pixel values are close to those in the block B0, are searched out from these reference frames Rf1 and Rf2, then the motion vectors MV1 and MV2 are estimated based on the displacement of the positions between the block B0 and the blocks B1, B2.

Then, a predictive image for the block B0 is generated based on the block B1 in the reference frame Rf1, which is indicated by the motion vector MV1, and the block B2 in the reference frame Rf2, which is indicated by the motion vector MV2. Namely, the predictive image is generated by interpolating the pixel values in the block B0 using the pixel values in the block B1 and the pixel values in the block B2. Such method of interpolating pixel values includes, for instance, an average value and an extrapolation. The extrapolation such as a fade has high effects in a prediction for screen effects in which pixel values change as the time passes. The change is represented as a line in a graph.

The block B0 is coded using the predictive image generated as described above.

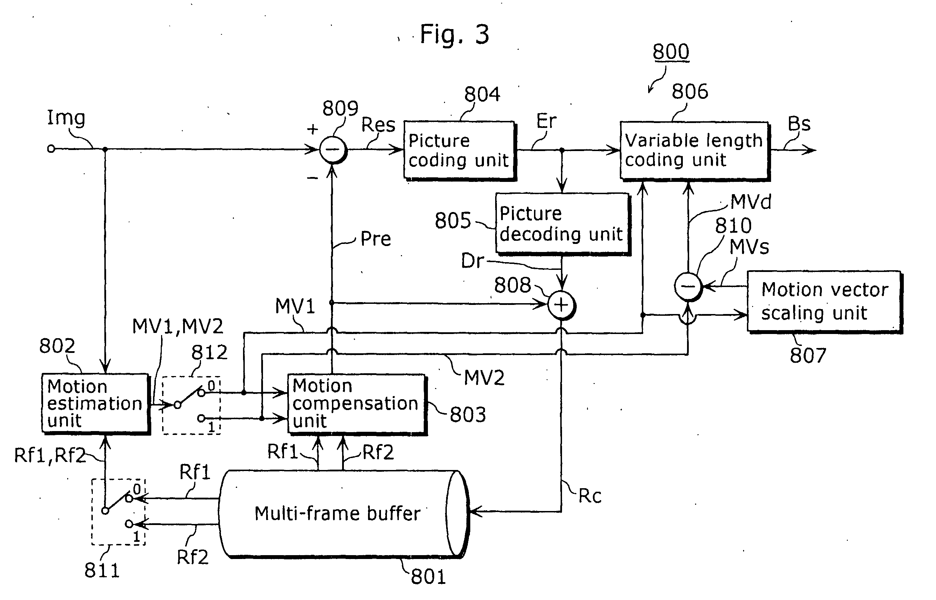

Fig. 3 is a block diagram showing the structure of the moving picture coding apparatus 800 for coding a moving picture by the conventional moving picture coding method.

The moving picture coding apparatus 800 is composed of a multi-frame buffer 801, a motion estimation unit 802, a motion compensation unit 803, a picture coding unit 804, a picture decoding unit 805, a variable length coding unit 806, a motion vector scaling unit 807, an adder 808, subtracters 809, 810, and switches 811, 812. The moving picture coding apparatus 800 divides a frame indicated by a picture signal Img into blocks and performs processing for each block.

The subtracter 809 subtracts a predictive picture signal Pre from the inputted picture signal Img and outputs a residual signal Res.

The picture coding unit 804 obtains the residual signal Res so as to perform picture coding processing such as DCT transformation and quantization, and outputs a coded residual signal Er containing quantized DCT coefficients.

The picture decoding unit 805 obtains the coded residual signal Er, performs picture decoding processing such as inverse quantization and inverse DCT transformation, and outputs a decoded residual signal Dr. The adder 808 adds the decoded residual signal Dr and the predictive image signal Pre so as to output a reconstructed picture signal Rc. Out of the reconstructed picture signal Rc, the signal which can be referred to in the inter-frame prediction to be performed later on is stored in the multi-frame buffer 801.

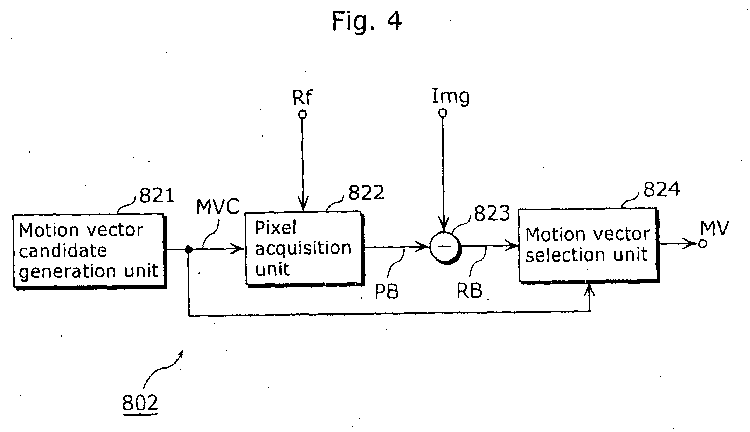

Fig. 4 is a block diagram showing the structure of the motion estimation unit 802.

The motion estimation unit 802 estimates a motion vector per block, and is composed of a motion vector candidate generation unit 821, a pixel acquisition unit 822, a subtracter 823 and a motion vector selection unit 824.

The motion vector candidate generation unit 821 generates a motion vector candidate MVC as a candidate for a motion vector MV of a current block to be coded. The motion vector generation unit 821 sequentially generates some motion vector candidates MVC within a predetermined range for motion vector estimation.

The pixel acquisition unit 822 acquires a single block in the reference frame Rf indicated by a motion vector candidate MVC, and outputs it as a predictive block PB to the subtracter 823.

The subtracter 823 calculates a differential between the pixel values in the current block indicated in the picture signal Img and those in the predictive block PB, and then outputs it as a prediction error block RB to the motion vector selection unit 824.

The motion vector selection unit 824 obtains a prediction error blocks RB for each of the motion vector candidates MVC generated in the motion vector candidate generation unit 821, and calculates a prediction error evaluation value such as SAD (a sum of absolute values of prediction error values) and SSD (a sum of squares of prediction error values) for each of the prediction error blocks RB using the pixel values in the respective blocks. Then, the motion vector selection unit 824 selects the motion vector candidate MVC based on which the smallest prediction error evaluation value is obtained, and outputs the selected motion vector candidate MVC as a motion vector MV.

When the forward interpolating prediction method is employed, the motion estimation unit 802 estimates the motion vectors MV1 and MV2 for the current block based on the two reference frames Rf1 and Rf2 by repeating the operation as described above.

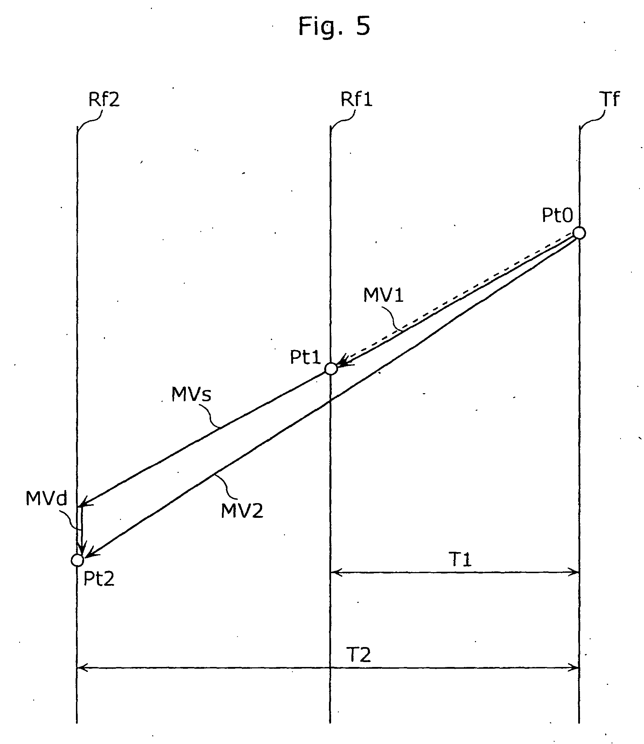

Fig. 5 is an illustration for explaining how the motion vectors MV1 and MV2 are estimated.

When contact points of the switches 811 and 812 are respectively shifted to the side "0", the motion estimation unit 802 searches out a block in which the pixel values are close to those in the current block in the current frame Tf (a block whose prediction error evaluation value is the smallest) by calculating the prediction error evaluation value as described above. The motion estimation unit 802 then estimates a motion vector MV1 indicating a displacement between a pixel Pt0 in the block within the current frame Tf and a pixel Pt1 whose relative position in the block searched out from the reference frame Rf1 is equivalent to that of the pixel Pt0 in the block.

Next, when the contact points of the switches 811 and 812 are respectively shifted to the side "1", the motion estimation unit 802 searches out a block, in which the pixel values are close to those in the current block within the current frame Tf (a block whose prediction error evaluation value is the smallest), from the reference frame Rf2, in the same manner as described above. The motion estimation unit 802 estimates a motion vector MV2 indicating a displacement between a pixel Pt0 in the block within the current frame Tf and a pixel Pt2 whose relative position in the block is equivalent to that of the pixel Pt0 in the block searched out from the reference frame Rf2.

When the forward interpolating prediction method is employed, the motion compensation unit 803 takes out, from the multi-frame buffer 801, the block located in the position indicated by the motion vector MV1 in the reference frame Rf1 as well as the block located in the position indicated by the motion vector MV2. The motion compensation unit 803 then interpolates the pixel values based on these blocks so as to generate a predictive image signal Pre presenting a predictive image, and outputs it.

It should be noted that the current block, based on which the predictive block is obtained by the forward interpolating prediction, is called a forward interpolating predictive block. It is possible that the motion compensation unit 803 switches to another prediction method per block, for example, a forward prediction in which a single frame, whose display time precedes that of the current frame, is used.

Here, a fade in which a pixel value (a luminance value) changes with time is explained. As is explained above, the position of the block containing the object changes according to the movement of the object, and also, the pixel value in the block changes with time as well.

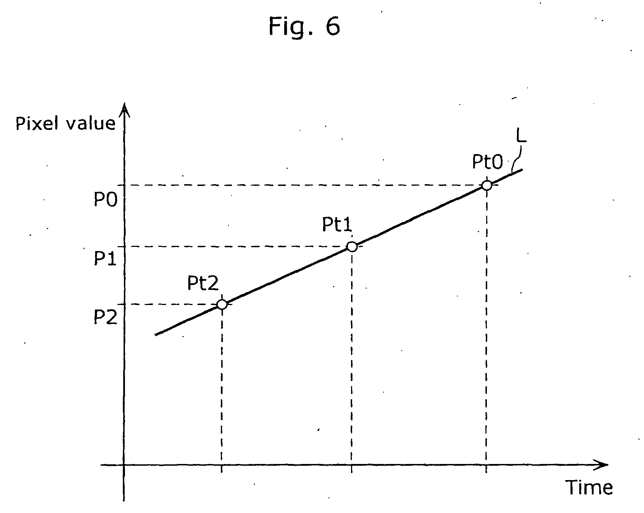

Fig. 6 is a graph showing the change of the pixel value, generated by the fade.

The pixel value of the pixel Pt2 indicated by the motion vector MV2 as described above changes into the pixel value of the pixel Pt1 indicated by the motion vector MV1. It can be presupposed that such change is proportional to time as indicated by a line L in Fig. 6, when the time interval is short.

Based on this, the pixel value P0 of the pixel Pt0 in the block B0 within the current frame Tf is predicted by performing an extrapolating based on the pixel values P1 and P2 of the pixels Pt1 and Pt2 in the reference frames Rf1 and Rf2, using the equation "P0=2 x P1- P2".

The motion compensation unit 803 heightens prediction effects for the fade and improves coding efficiency by performing the extrapolating using the above equation. Also, the motion compensation unit 803 performs interpolating (average value) instead of extrapolating for a picture without fade, therefore, widens the scope of choices for a more appropriate prediction method so as to improve coding efficiency.

The motion vector scaling unit 807 performs scaling for the motion vector MV1.

The motion vector scaling unit 807 performs scaling, as shown in Fig. 5, for the motion vector MV1 estimated by the motion estimation unit 802, based on a display time difference T1 indicating a difference in display time between the current frame and the reference frame Rf1 as well as a display time difference T2 indicating a difference in display time between the current frame and the reference frame Rf2.

Namely, the motion vector scaling unit 807 performs scaling for the motion vector MV1 by multiplying the motion vector MV1 by a ratio of the display time difference T2 to the display time difference T1 (T2/T1) so as to obtain a motion vector MVs.

The information on such display time differences T1 and T2 is obtained from the multi-frame buffer 801. Namely, a frame indicated by the reconstructed picture signal Rc is stored together with the information on display time of frames in the multi-frame buffer 801

The subtracter 810 subtracts the motion vector MVs as described above from the motion vector MV2 estimated by the motion estimation unit 802 so as to output a differential vector MVd shown in Fig. 5.

The variable length coding unit 806 performs variable length coding on the motion vector MV1, the differential vector MVd and the coded residual signal Er so as to output a coded picture signal Bs.

Thus, the moving picture coding apparatus 800 codes the picture signal Img with the processing explained above and outputs the coded picture signal Bs.

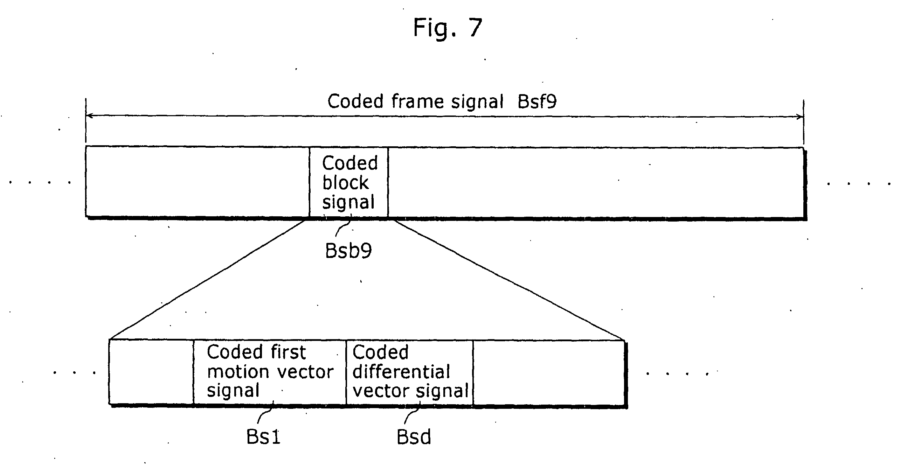

Fig. 7 is a conceptual diagram showing a concept of the format of the coded picture signal Bs.

The coded picture signal Bs contains a coded frame signal Bsf9 which indicates the frame that is coded based on the forward interpolating prediction, and the coded frame signal Bsf9 further contains a coded block signal Bsb9 which indicates the coded forward interpolating predictive block (a current block). And furthermore, the coded block signal Bsb9 has a coded first motion vector signal Bs1 which indicates the coded motion vector MV1 and a coded differential vector signal Bsd which indicates the coded differential vector MVd.

Based on a motion vector coding method operated by such moving picture coding apparatus 800, the motion vector MV1 and the differential vector Mvd are coded by the motion vector scaling unit 807, the subtracter 810 as well as the variable length coding unit 806. Therefore, when it is assumed that a direction and a speed of the movement of the object on the screen between the current frame Tf, the reference frame Rf1 and the reference frame Rf2 are constant, the differential vector MVd nears "0" (zero) and efficiency in coding the motion vector is high.

The following describes a moving picture decoding apparatus for decoding the picture coded by the moving picture coding apparatus 800.

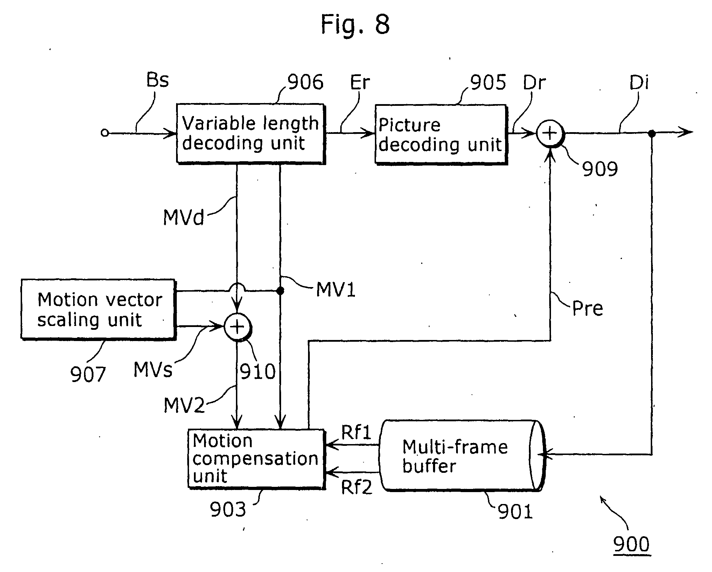

Fig. 8 is a block diagram showing the structure of the conventional moving picture decoding apparatus.

The moving picture decoding apparatus 900 is composed of a multi-frame buffer 901, a motion compensation unit 903, a picture decoding unit 905, a variable length decoding unit 906, a motion vector scaling unit 907, and adders 909, 910.

The variable length decoding unit 906 obtains a coded picture signal Bs so as to perform variable length decoding, and outputs a coded residual signal Er, a motion vector MV1 and a differential vector MVd.

The picture decoding unit 905 obtains the coded residual signal Er, performs picture decoding processing such as inverse quantization and inverse DCT transformation, and outputs a decoded residual signal Dr.

The motion vector scaling unit 907 obtains the motion vector MV1 outputted from the variable length decoding unit 906, performs scaling for the motion vector MV1 based on the display time difference T1 indicating a difference in display time between the current frame and the reference frame Rf1 as well as the display time difference T2 indicating a difference in display time between the current frame and the reference frame Rf2, in the same manner as operated by the motion vector scaling unit 807 of the moving picture coding apparatus 800, and outputs the motion vector generated as a result.

The adder 910 adds the motion vector MVs that is already scaled to the differential vector MVd, and outputs the result of the addition as a motion vector MV2.

The motion compensation unit 903 takes out, in the same manner as the motion compensation unit 803 in the moving picture coding apparatus 800, the block located in the position indicated by the motion vector MV1 in the reference frame Rf1 and the block located in the position indicated by the motion vector MV2 in the reference frame Rf2 from the multi-frame buffer 901. Then the motion compensation unit 903 performs processing of interpolating the pixel values based on these blocks, generates a predictive image signal Pre, and outputs it.

The adder 909 adds the predictive image signal Pre outputted from the motion compensation unit 903 to the decoded residual signal Dr outputted from the picture decoding unit 905, and outputs the result as a decoded picture signal Di.

The multi frame buffer 901 has the same structure as the multi frame buffer 801 in the moving picture coding apparatus 800 and stores the signal which can be used as reference in the inter-frame prediction out of the decoded picture signal Di.

Such moving picture decoding apparatus 900 decodes the coded picture signal Bs, and outputs the result as the decoded picture signal Di.

As described above, the prediction error evaluation value such as the SAD and the SSD is used in the method for estimating motion vectors, which is employed by many of the conventional moving picture coding apparatuses including the moving picture coding apparatus 800.

However, the change of the pixel value because of the fade is not taken into account in the conventional motion vector estimation method as described above. Therefore, a difference between values in the current block and those in the predictive block can easily occur. That is to say, a value of the prediction error evaluation value such as the SAD and the SSD described above may easily increase. This poses the problem that optimal motion vectors cannot be estimated.

**Disclosure of Invention**

An object of the present invention is, therefore, to provide the motion vector estimation method for estimating optimal motion vectors in spite of the fade.

In order to achieve the above object, a motion vector estimation method according to the present invention for estimating a motion vector indicating a displacement from another picture, for a block in a picture which constitutes a moving picture comprises: a first candidate generation step of generating, for the current block to be estimated, a first motion vector candidate based on a first reference picture; a second candidate generation step of generating, for the current block, a second motion vector candidate based on a second reference picture; an interpolation step of generating an interpolation predictive block by performing interpolation on each pixel value of each pixel in a first block for prediction in the first reference picture and each pixel value of each pixel in a second block for prediction in the second reference picture, said first block being indicated by the first motion vector candidate, said second block being indicated by the second motion vector candidate, said each pixel in the first block corresponding to said each pixel in the second block; a calculation step of calculating an evaluation value that is based on a difference between each pixel value of each pixel in the interpolation predictive block and each pixel value of each pixel in the current block, said each pixel in the interpolation predictive block corresponding to said each pixel in the current block; a selection step of selecting one first motion vector out of the plurality of the first motion vector candidates generated in the first candidate generation' step, and selecting one second motion vector out of a plurality of second motion vector candidates generated in the second candidate generation step, based on the evaluation value; and an estimation step of estimating, for the current block, i) the selected first motion vector candidate, as a first motion vector, based on the first reference picture, and ii) the selected second motion vector candidate, as a second motion vector, based on the second reference picture. In the selection step, for example, one first motion vector candidate and one second motion vector candidate are selected respectively, said first and second motion vector candidates, based on which the smallest evaluation value is obtained.

Thus, the evaluation value is calculated based on the result of interpolating pixel values. Therefore, even when the fade occurs, an increase in errors generated from the evaluation values affected by the fade can be prevented so that optimal motion vectors can be estimated.

Furthermore, the motion vector coding method according to the present invention for coding a motion vector indicating a displacement from another picture, for a block in a picture which constitutes a moving picture, comprises: a motion vector estimation step of estimating first and second motion vectors using the motion vector estimation method according to the present invention described above; and a coding step of coding respectively the first and second motion vectors.

Thus, optimal motion vectors can be coded respectively.

The motion vector coding method according to the present invention specifies a method for coding first and second motion vectors for a current picture to be coded in a moving picture by referring to two other pictures as reference pictures and codes information relating to the first and second motion vectors. The method comprises: a reading out step of reading out first and second reference pictures from a storage unit having a first area in which a picture is stored together with information on a display time of the picture and a second area in which other pictures are stored; a judgment step of judging whether or not at least one of the first and second reference pictures is read out from the second area; a differential vector obtainment step of obtaining a differential vector indicating a difference between the first motion vector and the second motion vector, when it is judged, in the judgment step, that at least one of the two reference pictures is read out from the second area in the judgment step; and a coding step of coding the first motion vector and the differential vector.

Thus, when at least one of the two reference pictures is read out from the second area, the scaling of the motion vector is not operated as has been the case in the conventional example. Therefore, the execution of impossible scaling is omitted and the efficiency in coding motion vectors can be improved.

On the other hand, the motion vector decoding method according to the present invention specifies a method for decoding first and second motion vectors for a current picture to be decoded in a moving picture by referring to two other pictures as reference pictures and decodes coded information obtained by coding the information relating to the first and second motion vectors. The method comprises: a decoding step of decoding the first motion vector and a related vector relating to the first and second motion vectors, based on the coded information; a reading out step of reading out the two reference pictures from a storage unit having a first area in which a picture is stored together with information on a display time of the picture and a second area in which a picture that is not stored in the first area is stored; a judgment step of judging whether or not at least one of the two reference pictures is read out from the second area, and an operation step of calculating the second motion vector by adding the related vector to the first motion vector, when it is judged, in the judgment step, that at least one of the two reference pictures is read out from the second area.

Thus, when at least one of the two reference pictures is read out from the second area, the scaling of motion vectors is not operated as has been the case in the conventional example. Therefore, the execution of impossible scaling is omitted and the efficiency in coding motion vectors can be improved.

It should be noted that the present invention can be realized as a moving picture coding apparatus, a program and a storage medium on which the program is stored, each employing the motion vector estimation method and motion vector coding method as described above.

For further information about technical background to this application, Japanese Patent Application No. 2002-070046 filed on March 14, 2002, No. 60/377955 filed on May 7, 2002 and No. 2002-332846 filed on November 15, 2002 are incorporated herein by reference.

**Brief Description of Drawings**

These and other objects, advantages and features of the invention will become apparent from the following description thereof taken in conjunction with the accompanying drawings that illustrate a specific embodiment of the invention. In the drawings:

Fig. 1 is an illustration for explaining a motion vector;
Fig. 2 is an illustration for explaining how a predictive picture is generated using two frames;
Fig. 3 is a block diagram showing the structure of the moving picture coding apparatus used in a conventional example;
Fig. 4 is a block diagram showing the structure of the motion estimation unit in the moving picture coding apparatus used in the conventional example;
Fig. 5 is an illustration for explaining how motion vectors are estimated by the motion estimation unit used in the conventional example;
Fig. 6 is an illustration for explaining the change of pixel value generated by a fade;
Fig. 7 is a conceptual diagram showing a concept of the format of the coded picture signal outputted by the moving picture coding apparatus used in the conventional example;
Fig. 8 is a block diagram showing the structure of the moving picture decoding apparatus used in the conventional example;
Fig. 9 is a block diagram showing the structure of the moving picture coding apparatus according to a first embodiment of the present invention;
Figs 10A~10C show respectively an alignment of frames which indicates positional relations of time between reference frames and a current frame to be coded;
Fig. 11 is a block diagram showing the structure of the motion estimation unit in the moving picture coding apparatus according to the first embodiment of the present invention;
Fig. 12 is an illustration for explaining a method for generating first and second motion vector candidates, according to the first embodiment of the present invention;
Fig. 13 is a conceptual diagram showing a concept of the format of the coded picture signal, according to the first embodiment of the present invention;
Fig. 14 is a flowchart showing the operation performed by the moving picture coding apparatus for estimating and coding motion vectors;
Fig. 15 is a block diagram showing the structure of the moving picture decoding apparatus according to a second embodiment of the present invention;
Fig. 16 is a block diagram showing the structure of the moving picture coding apparatus according to a third embodiment of the present invention;
Fig. 17 is a block diagram showing the structure of the motion estimation unit in the moving picture decoding apparatus according to the third embodiment of the present invention;
Fig. 18 is an illustration for explaining a method for generating the first and second motion vector candidate, according to the third embodiment of the present invention;
Fig. 19 is a conceptual diagram showing a concept of the format of the coded picture signal according to the third embodiment of the present invention;
Fig. 20 is a block diagram showing the structure of the moving picture decoding apparatus according to a fourth embodiment of the present invention;
Fig. 21 is a block diagram showing the structure of the moving picture coding apparatus according to a fifth embodiment of the present invention;
Fig. 22 is a block diagram showing the structure of the motion estimation unit in the moving picture coding apparatus according to the fifth embodiment of the present invention;
Figs 23A and 23B are illustrations respectively explaining a method for generating the first and second motion vector candidates as well as a motion vector;

Fig. 24 is a block diagram showing the structure of the moving picture coding apparatus according to a variation of the fifth embodiment of the present invention;

Fig. 25 is a conceptual diagram showing a concept of the format of the coded picture signal outputted by the moving picture coding apparatus according to a variation of the fifth embodiment of the present invention;

Fig. 26 is a block diagram showing the structure of the moving picture decoding apparatus according to a sixth embodiment of the present invention;

Fig. 27 is a block diagram showing the structure of the moving picture coding apparatus according to a seventh embodiment of the present invention;

Fig. 28 is a structural diagram showing an outline structure of the memory incorporated in the multi-frame buffer according to the seventh embodiment of the present invention;

Figs 29A and 29B are state diagrams showing respectively a state of frames stored in the multi-frame buffer according to the seventh embodiment of the present invention;

Fig. 30 is an illustration for explaining how a differential vector is generated, according to the seventh embodiment of the present invention;

Fig. 31 is a flowchart showing a sequence of operations for coding a motion vector, according to the seventh embodiment of the present invention;

Fig. 32 is a block diagram showing the structure of the moving picture decoding apparatus according to an eighth embodiment of the present invention;

Fig. 33 is a flowchart showing a sequence of operations for decoding a motion vector, according to the eighth embodiment of the present invention;

Fig. 34 is an illustration of the storage medium according to a ninth embodiment of the present invention;

Fig. 35 is a block diagram showing the whole configuration of the content supply system according to a tenth embodiment of the present invention;

Fig. 36 is a front elevation of the cell phone according to the tenth embodiment of the present invention;

Fig. 37 is a block diagram of the cell phone according to the tenth embodiment of the present invention; and

Fig. 38 is a block diagram showing the whole configuration of a digital broadcasting system.

**Best Mode for Carrying Out the Invention**

(First embodiment)

The following describes the moving picture coding apparatus according to the first embodiment of the present invention with reference to the diagrams.

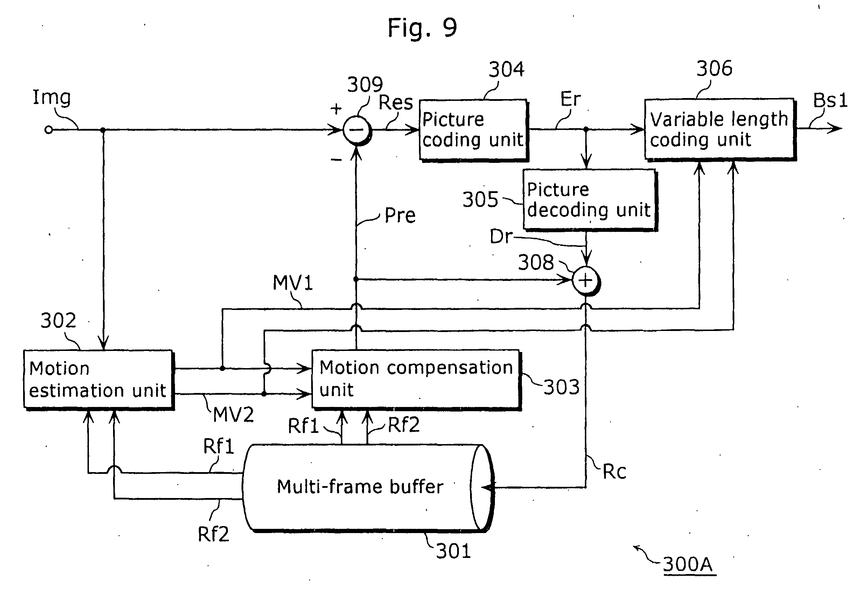

Fig. 9 is a block diagram showing the structure of the moving picture coding apparatus 300A according to the present embodiment.

The moving picture coding apparatus 300A of the present embodiment is composed of a multi-frame buffer 301, a motion estimation unit 302, a motion compensation unit 303, a picture coding unit 304, a picture decoding unit 305, a variable length coding unit 306, an adder 308 and a subtracter 309. Such moving picture coding apparatus 300A estimates optimal motion vectors and codes them. The motion estimation unit 302 estimates optimal motion vectors MV1 and MV2 for the current block in a current frame Tf to be coded indicated by a picture signal Img based respectively on reference frames Rf1 and Rf2 which are read out from the multi-frame buffer 301.

When a forward interpolation prediction is employed, the motion compensation unit 303 extracts from the multi-frame buffer 801, as performed by the motion compensation unit 803 in the moving picture coding apparatus 800, a block'located in the position indicated by the motion vector MV1 in the reference frame Rf1 and a block located in the position indicated by the motion vector MV2 in the reference frame Rf2. The motion compensation unit 303 then generates, based on these blocks, a predictive picture signal Pre indicating a predictive picture by interpolating the pixel values as shown in the extrapolation described in Fig. 6, and outputs it. Thus, prediction effects on fade can be heightened by interpolating the pixel values through extrapolation. The motion compensation unit 303 may switch, per current block, a prediction method between the forward interpolation prediction and another prediction method which can be, for instance, a forward prediction using a single frame displayed earlier than the current frame.

The subtracter 309 subtracts the predictive image signal Pre from the picture signal Img and outputs a residual signal Res.

The picture coding unit 304 obtains the residual signal Res, performs picture coding processing such as DCT transformation and quantization, and outputs a coded residual signal Er including quantized DCT coefficients.

The picture decoding unit 305 obtains the coded residual signal Er, performs picture coding processing such as inverse quantization and inverse DCT transformation, and outputs a decoded residual signal Dr.

The adder 108 adds the predictive image signal Pre to the decoded residual signal Dr, and outputs a reconstructed picture signal Rc.

The multi-frame buffer 301 stores the signal that can be referred to in the inter-frame prediction, out of the reconstructed picture signal Rc.

The variable length coding unit 306 performs variable length coding on the motion vectors MV1 and MV2 estimated by the motion estimation unit 302 and the coded residual signal Er outputted by the picture coding unit 304, and outputs the result of coding as a coded picture signal Bs1.

When coding each of the blocks in the current frame Tf indicated in the picture signal Img, the moving picture coding apparatus 300A as described above refers to two reference frames Rf1 and Rf2, and estimates the motion vectors MV1 and MV2 for the current block based on the reference frames Rf1 and Rf2. The moving picture coding apparatus 300A then codes respectively the estimated motion vectors MV1 and MV2, and also codes the difference between each pixel value in the predictive picture predicted based on the reference frames Rf1, Rf2 as well as the motion vectors MV1, MV2 and each pixel value in the current block.

Here, the reference frames Rf1 and Rf2 may be located either temporally previous or subsequent to the current frame Tf.

Fig. 10A~10C respectively show a frame alignment which indicates a positional relation of time between the respective reference frames Rf1, Rf2 and the current frame Tf.

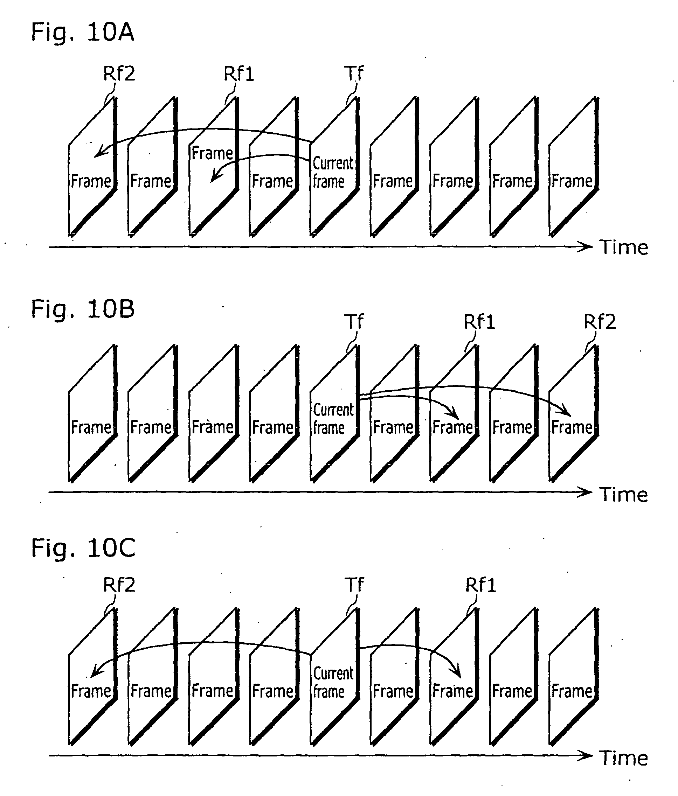

The moving picture coding apparatus 300A may refer to the frames located forward to the current frame Tf as reference frames Rf1 and Rf2 as shown in Fig. 10A or the frames located backward to the current frame Tf as reference frames Rf1 and Rf2 as shown in Fig. 10B. The moving picture coding apparatus 300A may further refer to a single frame located forward to the current frame Tf as a reference frame Rf2 and a single frame located backward to the current frame Tf as a reference frame Rf1 as shown in Fig. 10C, or inversely, a single frame located forward to the current frame Tf as a reference frame Rf1 and a single frame located backward to the current frame Tf as a reference frame Rf2.

The following describes an operation performed by the motion estimation unit 302 of the moving picture coding apparatus 300A according to the present embodiment.

The motion estimation unit 302, as described above, estimates the motion vectors MV1 and MV2 for the current block, based on the respective reference frames Rf1 and Rf2, and outputs these motion vectors MV1 and MV2 to the motion compensation unit 303.

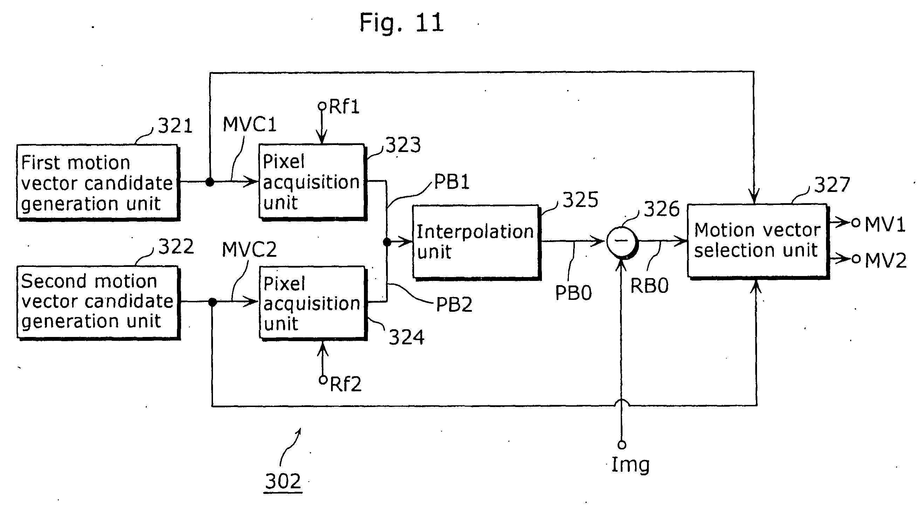

Fig. 11 is a block diagram showing the structure of the motion estimation unit 302.

The motion estimation unit 302 according to the present embodiment is composed of a first motion vector candidate generation unit 321, a second motion vector candidate generation unit 322, pixel acquisition units 323 and 324, an interpolation unit 325, a subtracter 326 and a motion vector selection unit 327.

The first motion vector candidate generation unit 321 extracts all the candidates for the motion vector MV1 based on the reference frame Rf1 for the current block within a predetermined rage of estimation, and outputs them respectively as a first motion vector candidate MVC1.

The second motion vector candidate generation unit 322 extracts all the candidates for the motion vector MV2 based on the reference frame Rf2 for the current block, and outputs them respectively as a second motion vector candidate MVC2, in the same manner as operated by the first motion vector candidate generation unit 321.

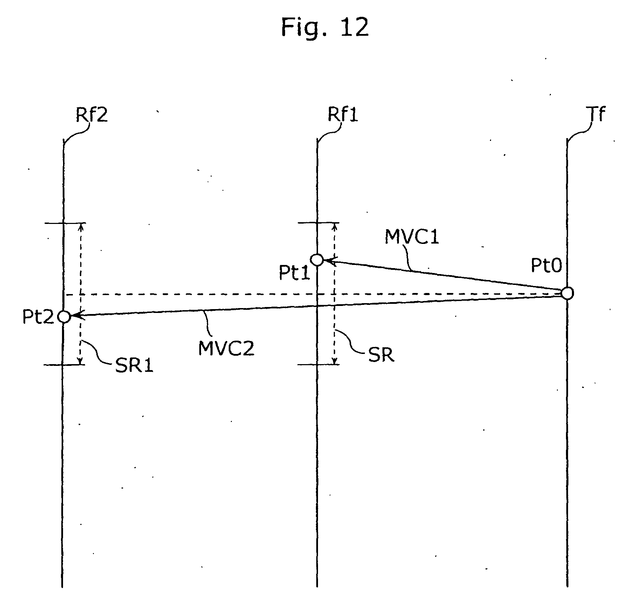

Fig. 12 is an illustration for explaining a method of generating a first motion vector candidate MVC1 and a second motion vector candidate MVC2.

The first motion vector candidate generation unit 321 selects any one pixel Pt1 from a motion vector search range SR in the reference frame Rf1, and outputs a displacement between the pixel Pt0 in the current block and the pixel Pt1, as a first motion vector candidate MVC1. The second motion vector candidate generation unit 322 selects any one pixel Pt2 from a motion vector search range SR1 in the reference frame Rf2, and outputs a displacement between the pixel Pt0 in the current block and the pixel Pt2, as a second motion vector candidate MVC2.

The pixel acquisition unit 323 acquires one block in the reference frame Rf1 indicated by the first motion vector candidate MVC1 (a block including the pixel Pt1 in Fig. 12), and outputs it as a predictive block PB1 to the interpolation unit 325.

The pixel value acquisition unit 324 acquires one block in the reference frame Rf2 indicated by the second motion vector candidate MVC2 (a block including the pixel Pt2 in Fig. 12), and outputs it as a predictive block PB2 to the interpolation unit 325.

The interpolation unit 325 generates an interpolation predictive block PB0 with respect to the current block by interpolating pixel values using two pixels whose relative positions in the respective predictive blocks PB1 and PB2 are the same, and outputs it to the subtracter 326.

Such processing of interpolating pixel values is operated by extrapolating two pixel values in the case of employing forward interpolation prediction, as described in Fig. 6. Namely, when the pixel Pt1 in the predictive block PB1 and the pixel Pt2 in the predictive block PB2 have the same relative position in the respective blocks as shown in Fig. 6 a calculation is made using equation "P0' =2xP1-P2" by substituting the pixel value P1 of the pixel Pt1 and the pixel value P2 of the pixel Pt2. Thus, an interpolation predicted pixel value P0' of the pixel Pt0 in the current block with respect to the pixels Pt1, Pt2 is calculated. The interpolation unit 325 then generates an interpolation predictive block PB0 by calculating an interpolation predicted pixel value P0' with respect to all the pixels in the current block.

The subtracter 326 calculates a differential between the pixel value of the pixel in the current block indicated in the picture signal Img and the pixel value of the pixel in the interpolation predictive block PB0 (i.e., P0-P0'), and outputs the result as a prediction error block RB0 to the motion vector selection unit 327.

The motion vector selection unit 327acquires the prediction error block RB0 from the subtracter 326 and then calculates a prediction error evaluation value using SAD (a sum of absolute value of a prediction error value) shown in the equation 1 below and SDD (a sum of squares of a prediction error value) shown in the equation 2 below.

(Equation 1)    $SAD = \Sigma\ |P0-(2xP1-P2)|$

(Equation 2)    $SDD = \Sigma\ |P0- (2xP1-P2))^2$

The prediction error evaluation value is calculated for all the combinations respectively made of one of the first motion vector candidates MVC1 generated by the first motion vector candidate generation unit 321 and one of the second motion vector candidates MVC2 generated by the second motion vector candidate generation unit 322.

The motion vector selection unit 327 then selects the first motion vector candidate MVC1 and the second motion vector candidate MVC2, based on which the prediction error evaluation value is the smallest, and outputs the selected motion vector candidate MVC1, as a motion vector MV1 of the current block, which is based on the reference frame Rf1, and the selected second motion vector candidate MVC2, as a motion vector MV2 of the current block, which is based on the reference frame Rf2.

Thus, the motion estimation unit 302 according to the present embodiment can estimate optimal motion vectors even though pixel values change according to the fade since the motion vectors are estimated in consideration of the change.

The variable length coding unit 306 then codes the motion vectors MV1 and MV2 estimated by the motion estimation unit 302 as described above, and outputs these motion vectors after having included in the coded picture signal Bs1. The variable length coding unit 306 may subtract, from the motion vectors MV1 and MV2 respectively, the predicted values of the motion vectors MV1 and MV2, which are calculated using the blocks neighboring the current block, and code the differentials respectively.

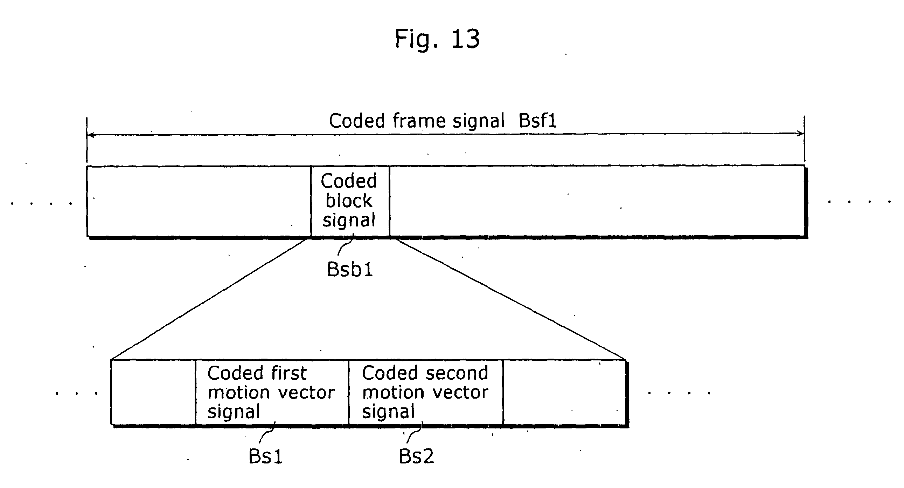

Fig. 13 is a conceptual diagram showing a concept of the format of the coded picture signal Bs1.

The coded picture signal Bs1 includes a coded frame signal Bsf1 indicating a coded frame, and the coded frame signal Bsf1 further includes a coded block signal Bsb1 indicating a coded block. The coded block signal Bsb1 further contains a coded first motion vector signal Bs1 indicating a coded motion vector MV1 and a coded second vector signal Bs2 indicating a coded motion vector MV2.

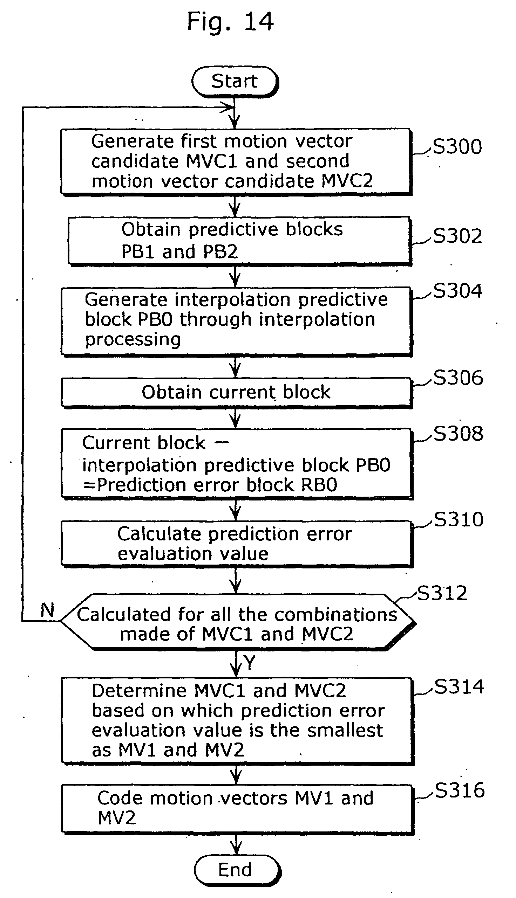

Fig. 14 is a flowchart showing the operation performed by the moving picture coding apparatus 300A for estimating and coding motion vectors.

Firstly, the motion estimation unit 302 in the moving picture coding apparatus 300A generates one first motion vector candidate MVC1 and one second motion vector candidate MVC2 (Step S300).

The motion estimation unit 302 obtains the predictive block PB1 indicated by the first motion vector candidate MVC1 and the predictive block PB2 indicated by the second motion vector candidate MVC2 (Step S302).

Then, the motion estimation unit 302 generates an interpolation predictive block PB0 by pixel interpolating the predictive blocks PB1 and PB2 (Step S304).

After that, the motion estimation unit 302 obtains a current block (Step S306), calculates a differential between the current block and the interpolating predictive block PB0, and generates a prediction error block RB0 (Step S308).

The motion estimation unit 302 then calculates a prediction error evaluation value using the prediction error block RB0 generated in Step S308 (Step S310), and judges whether or not the prediction error evaluation value is calculated for all the combinations respectively made of one first motion vector candidate MVC1 and one second motion vector candidate MVC2 (Step S312).

When judging that the prediction error evaluation value is not calculated for all the combinations (N in Step S312), the motion estimation unit 302 generates a combination of a first motion vector candidate MVC1 and a second motion vector candidate MVC2, which is different from the previous one, and repeats the same operation starting from Step S300. When judging that the prediction error evaluation value is calculated for all the combinations (Y in Step 312), the motion estimation unit 302 estimates the first motion vector candidate MVC1, which is generated in Step 5300 when the smallest prediction error evaluation value is obtained out of all the prediction error evaluation values calculated in Step S310, as a motion vector MV1. The motion estimation unit 302 also estimates the second motion vector candidate MVC2 then used for the obtainment of the smallest prediction error evaluation value, as a motion vector MV2 (Step S314).

The variable length coding unit 306 in the moving picture coding apparatus 300A then codes respectively the motion vectors MV1 MV2 which are estimated in Step 314 (Step S316).

Thus, in the present embodiment, the prediction error evaluation value is calculated based on the result of interpolating pixel values, therefore, the increase in the value of the prediction error evaluation value can be avoided even in the case where the fade occurs, and thereby, optimal motion vectors can be estimated. Consequently, coding efficiency in coding motion vectors can be improved as well.

(Second embodiment)

The following describes the moving picture decoding apparatus according to the second embodiment of the present invention with reference to the diagrams.

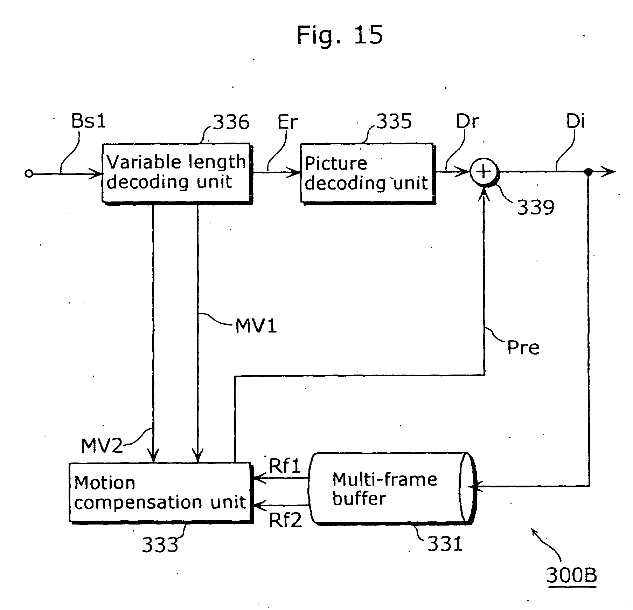

Fig. 15 is a block diagram showing the structure of the moving picture decoding apparatus 300B according to the present embodiment.

The moving picture decoding apparatus 300B described in the present invention is composed of a variable length decoding unit 336, a motion compensation unit 333, a picture decoding unit 335, a multi-frame buffer 331 and an adder 339. Such moving picture decoding apparatus 300B decodes the moving picture coded by the moving picture coding apparatus 300A.

The variable length decoding apparatus 336 obtains the coded picture signal Bs1, performs variable length decoding on it, and outputs the coded residual signal Er as well as the motion vectors MV1 and MV2. It should be noted that when the differentials between the respective motion vectors MV1, MV2 and the predicted values of the motion vectors MV1 and MV2, which are calculated using the blocks neighboring a current block to be decoded, are coded, the variable length decoding unit 336 may decode respectively the coded differentials and generate the motion vectors MV1 and MV2, by adding the predicted values to the respective differentials.

The picture decoding unit 335 obtains the coded residual signal Er, performs picture decoding processing such as inverse quantization and inverse DCT transformation on it, and outputs a decoded residual signal Dr.

The motion compensation unit 333 extracts, from the multi-frame buffer 331, a block located in the position indicated by the motion vector MV1 based on the reference frame Rf1 and a block located in the position indicated by the motion vector MV2 based on the reference frame Rf2. The motion compensation unit 333 then generates a predictive picture signal Pre by interpolating pixel values through extrapolation as explained in Fig. 6, and outputs it.

The adder 339 adds the predictive image signal Pre generated by the motion compensation unit 333 to the decoded residual signal Dr outputted by the picture decoding unit 335, and outputs the result as a decoded picture signal Di.

The multi-frame buffer 331 stores the signal which can be used for reference in the inter-frame prediction, out of the decoded picture signal Di.

Such moving picture decoding apparatus 300B according to the present embodiment can decode correctly the picture coded by the moving picture coding apparatus 300A by performing motion compensation based on the motion vectors MV1 and MV2.

(Third embodiment)

The following describes the moving picture coding apparatus according to the third embodiment of the present invention with reference to the diagrams.

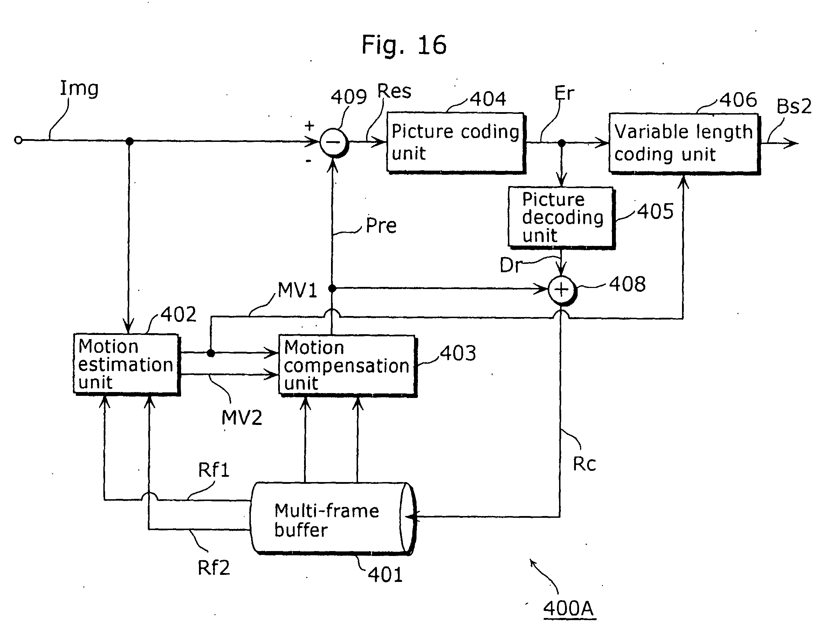

Fig. 16 is a block diagram showing the structure of the moving picture coding apparatus 400A according to the present embodiment.

The moving picture coding apparatus 400A according to the present embodiment is composed of a multi-frame buffer 401, a motion estimation unit 402, a motion compensation unit 403, a picture coding unit 404, a picture decoding unit 405, a variable length coding unit 406, an adder 408 and a subtracter 409. Such moving picture coding apparatus 400A estimates optimal motion vectors and codes them in the same manner as shown in the first embodiment,.

The multi-frame buffer 401, the motion compensation unit 403, the picture coding unit 404, the picture decoding unit 405, the adder 408 and the subtracter 409 of the present embodiment respectively have the same function and structure as the multi-frame buffer 301, the motion compensation unit 303, the picture coding unit 304, the picture decoding unit 305, the adder 308 and the subtracter 309 which are described in the first embodiment.

The moving picture coding apparatus 400A according to the present embodiment employs a method of estimating and coding motion vectors different from the one described in the first embodiment. The method employed in the present embodiment estimates only one motion vector and codes it even in the case of using forward interpolating prediction.

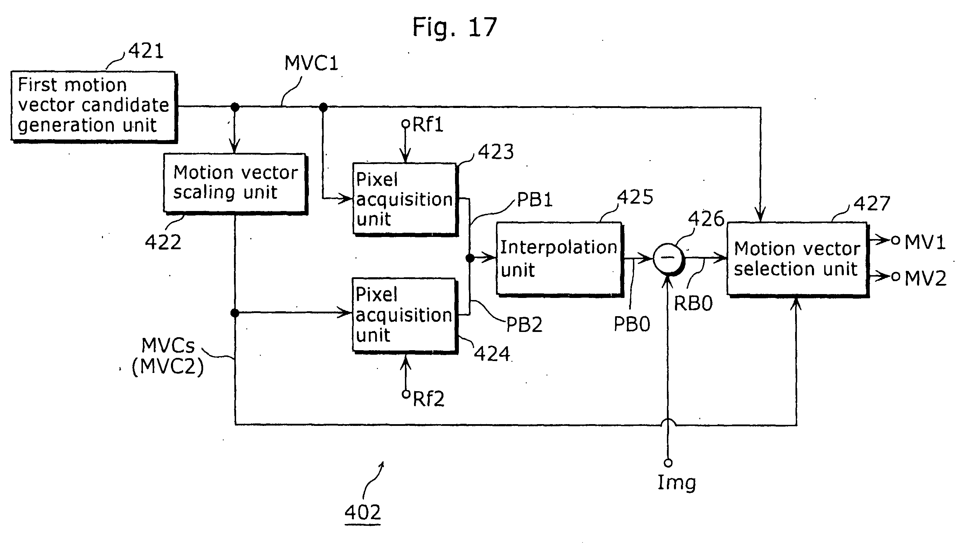

Fig. 17 is a block diagram showing the structure of the motion estimation unit 402 of the present embodiment.

The motion estimation unit 402 according to the present embodiment is composed of a first motion vector candidate generation unit 421, a motion vector scaling unit 422, pixel acquisition units 423, 424, an interpolation unit 425, a subtracter 426 and a motion vector selection unit 427. The motion estimation unit 402 estimates optimal motion vectors MV1 and MV2 for a block (a current block to be coded) in the current frame Tf indicated in the picture signal Img, based respectively on the reference frames Rf1 and Rf2 which are read out from the multi-frame buffer 401.

Here, the first motion vector candidate generation unit 421, the pixel acquisition units 423, 424, the interpolation unit 425, the subtracter 426 and the motion vector selection unit 427 respectively have the same function and structure as the motion estimation unit 302, the first motion vector candidate generation unit 321, the pixel acquisition units 323, 324, the interpolation unit 325, the subtracter 326 and the motion vector selection unit 327 described in the first embodiment.

Namely, the motion estimation unit 402 according to the present embodiment includes the motion vector scaling unit 422 instead of the second motion vector candidate generation unit 322 described in the first embodiment, and generates a second motion vector candidate MVC2 by scaling a first motion vector candidate MVC1.

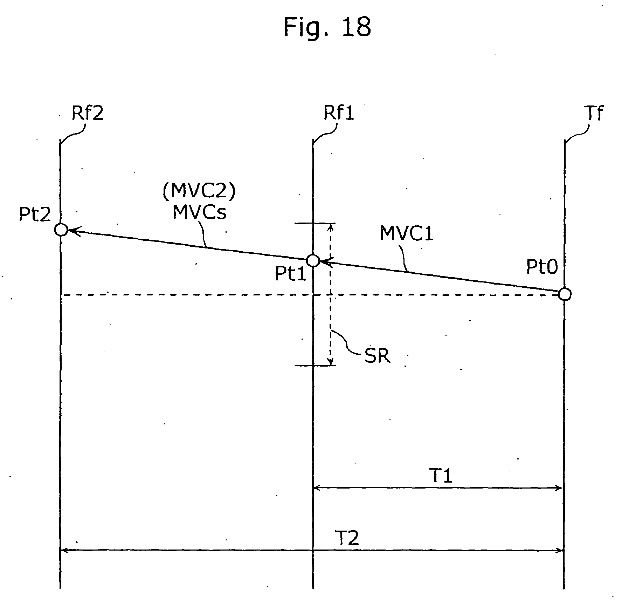

Fig. 18 is an illustration for explaining a method of generating a first motion vector candidate MVC1 and a second motion vector candidate MVC2.

The first motion vector candidate generation unit 421 selects any one pixel Pt1 from the motion vector search range SR in the reference frame Rf1, and outputs a displacement between the pixel Pt0 in the current block and the pixel Pt1, as a first motion vector candidate MVC1.

The motion vector scaling unit 422 acquires the first motion vector candidate MVC1 generated as described above and then performs scaling on it based on the display time difference T1 indicating a difference in display time between the current frame Tf and the reference frame Rf1 as well as the display time difference T2 indicating a difference in display time between the current frame and the reference frame Rf2.

Namely, the motion vector scaling unit 422 performs scaling for the first motion vector candidate MVC1 by multiplying the motion vector candidate MVC1 by the ratio of the display time difference T2 to the display time difference T1 (T2/T1), and calculates a motion vector MVCs.

The motion vector scaling unit 422 outputs, to the pixel acquisition unit 424 and the motion vector selection unit 427, the motion vector MVCs obtained by performing such seating.

The pixel acquisition unit 424 and the motion vector selection unit 427 obtain the motion vector MVCs from the motion vector scaling unit 422, process it as a second motion vector candidate MVC2 and respectively perform the same operation as described in the first embodiment.

The motion vector candidate generation unit 421 generates sequentially all the first motion vector candidates MVC1 within the motion vector search range SR while the motion vector scaling unit 422 performs scaling on the first motion vector candidate MVC1, each time it is obtained, so as to generate a motion vector candidate MVCs.

The motion vector selection unit 427 calculates a prediction error evaluation value based on the first motion vector candidate MVC1 and the motion vector MVCs generated based on it, each time the first motion vector candidate MVC1 is generated by the first motion vector candidate generation unit 421. As a result, the motion vector selection unit 427 selects the first motion vector candidate MVC1 and the motion vector MVCs, based on which the smallest prediction error evaluation value is obtained. The motion vector selection unit 427 then outputs the selected first motion vector candidate MVC1 and motion vector MVCs respectively as motion vectors MV1 and MV2.

The following describes a sequence of operations performed by the motion estimation unit 402 as described above.

Firstly, the first motion vector candidate generation unit 421 generates a first motion vector candidate MVC1 that is a candidate for the motion vector MV1.

Then, the motion vector scaling unit 422 generates a motion vector MVCs by performing scaling on the first motion vector candidate MVC1, and outputs it.

The pixel acquisition unit 423 acquires a block including the pixel in the reference frame Rf1 indicated by the first motion vector candidate MVC1, as a predictive block PB1, and outputs it to the interpolation unit 425. The pixel acquisition unit 424 acquires a block including the pixel in the reference frame Rf2 indicated by the motion vector MVCs, as a predictive block PB2, and outputs it to the interpolation unit 425.

The interpolation unit 425 generates an interpolation predictied block PB0 by interpolating the pixel values of the pixels in the two predictive blocks PB1 and PB2, respectively obtained by the pixel acquisition units 423 and 424.

The subtracter 426 calculates a differential between the pixel values in the interpolation predictive block PB0 and those in the current block in the picture signal Img, and outputs the calculation as a prediction error block RB0.

The motion vector selection unit 427 calculates the prediction error evaluation value based on the pixel values of the pixels in the prediction error block RB0. The motion vector selection unit 427 then selects a first motion vector candidate MVC1 and a motion vector MVCs, based on which the smallest prediction error evaluation value is obtained, after having calculated prediction error evaluation value as described above for all the first motion vector candidates MVC1 generated by the first motion vector candidate generation unit 421.

The motion vector selection unit 427 then outputs the selected first motion vector candidate MVC1 and motion vector MVCs respectively, as motion vectors MV1 and MV2.

The motion estimation unit 402 according to the present embodiment thus calculates the prediction error evaluation value based on the result of interpolating pixel values as in the first embodiment. The increase of the prediction error evaluation value caused by fade can be therefore prevented and optimal motion vectors can be estimated even in the case of fade. The motion estimation unit 402 according to the present embodiment does not perform a substantial estimation for a motion vector MV2 even in the case of employing forward interpolating prediction, but generates a motion vector MV2 by scaling the motion vector MV1. This eliminates the procedure to estimate a motion vector MV2 and thus improves coding efficiency.

The variable length coding unit 406 according to the present embodiment performs variable length coding on the motion vector MV1 as well as the coded residual signal Er, and outputs a coded picture signal Bs2.

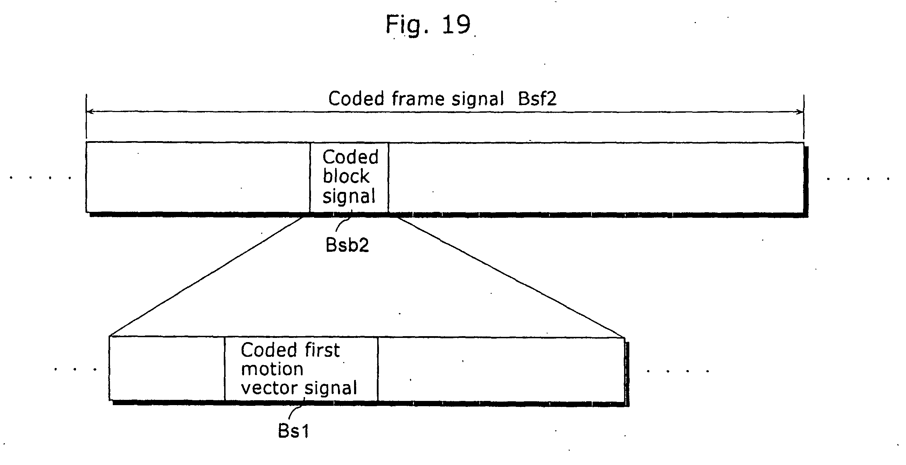

Fig. 19 is a conceptual diagram showing the concept of the format of the coded picture signal Bs2.

The coded picture signal Bs2 includes a coded frame signal Bsf2 indicating coded frames and the coded frame signal Bsf2 further includes a coded block signal Bsb2 indicating coded blocks. Furthermore, the coded block signal Bsb2 includes a coded motion vector signal Bs1 indicating a coded motion vector MV1.

Thus, in the present embodiment, a coded second motion vector signal Bs2 indicating the coded motion vector MV2 does not need to be stored in the coded picture signal Bs2. Therefore, the code amount is reduced and coding efficiency can be improved.

It should be noted that, in the present embodiment, the case of employing a forward interpolating prediction is explained as shown in Fig. 8, however, the reference frames Rf1 and Rf2 may be located either forward or backward of the current frame Tf.

In addition, in the present embodiment, a frame, whose display time difference with the basis on the current frame is greater than that of the reference frame Rf1, is selected as a reference frame Rf2, and scaling is performed on the first motion vector candidate MVC1 which is obtained based on the reference frame Rf1. However, the frame with the display time earlier than that of the current frame may be selected as a reference frame Rf1 while the frame with the display time later than that of the current frame may be selected as a reference frame Rf2, and scaling may be performed on the first motion vector candidate MVC1 which is obtained based on the reference frame Rf1.

It should be noted that the variable length coding unit 406 may code a differential between the motion vector MV1 and the predictive value predicted using the motion vectors of the blocks neighboring the current block, and the coded signal indicating the result may be included in the coded block signal Bsb2 instead of the coded motion vector signal Bs1. In this case, coding efficiency can be further improved.

(Fourth embodiment)

The following explains the moving picture decoding apparatus according to the fourth embodiment of the present invention with reference to the diagrams.

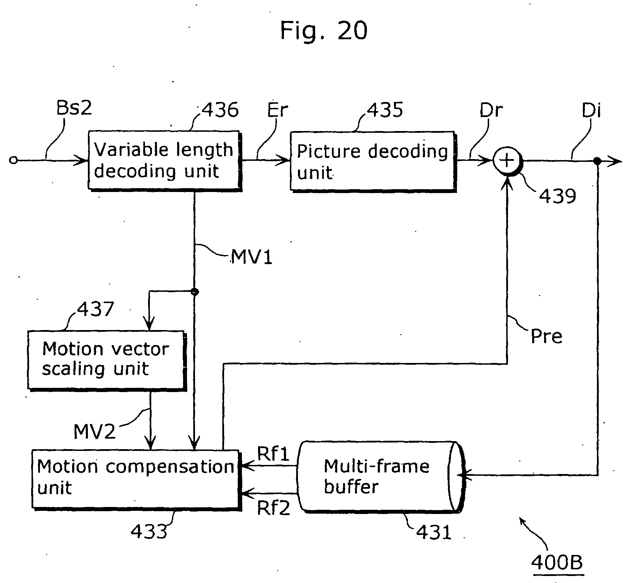

Fig. 20 is a block diagram showing the structure of the moving picture decoding apparatus 400B according to the present embodiment.

The moving picture decoding apparatus 400B according to the present embodiment is composed of a variable length decoding unit 436, a motion vector scaling unit 437, a motion compensation unit 433, a picture decoding unit 435, a multi-frame buffer 431 and an adder 439. Such moving picture decoding apparatus 400B decodes the moving picture coded by the moving picture coding apparatus 400A.

Here, the picture decoding unit 435, the motion compensation unit 433, the multi-frame buffer 431 and the adder 439 respectively have the same function and structure as the picture decoding unit 335, the motion compensation unit 333, the multi-frame buffer 331 and the adder 339 in the moving picture decoding apparatus 300B according to the second embodiment.

The variable length decoding unit 436 obtains the coded picture signal Bs, performs variable length decoding on it, and outputs the coded residual signal Er and the motion vector MV1. It should be noted that when the motion vector MV1, which is obtained based on the block neighboring the current block and from which a predicted value of the motion vector MV1 is subtracted, is coded, the variable length decoding apparatus 436 may generate and output a motion vector MV1 by decoding the coded differential and then adding the predicted value to it.

The motion vector scaling unit 437, in the same manner as the motion vector scaling unit 907 in the moving picture decoding apparatus 900, obtains the motion vector MV1 outputted from the variable length decoding unit 906 and performs scaling on it. The scaling is based on the following: the display time difference T1, a difference in display time between the current frame Tf and the reference frame Rf1; and the display time difference T2, a difference in display time between the current frame Tf and the reference frame Rf1. The motion vector scaling unit 437 then outputs, to the motion compensation unit 433, the motion vector generated as a result, as the motion vector MV2 estimated based on the reference frame Rf2.

The motion compensation unit 433 extracts, in the same manner as the motion compensation unit 333 according to the second embodiment, from the multi-frame buffer 431, the block located in the position indicated by the motion vector MV1 in the reference frame Rf1 and the block located in the position indicated by the motion vector MV2 in the reference frame Rf2. The motion compensation unit 433 then interpolates the pixel values based on these blocks, generates a predictive picture signal Pre and then outputs it.

The moving picture coding apparatus 400B according to the present embodiment can estimate a motion vector MV2 by performing scaling on the motion vector MV1, and decode correctly the picture coded by the moving picture coding apparatus 400A.

(Fifth embodiment)

The following describes the moving picture coding apparatus according to the fifth embodiment of the present invention with reference to the diagrams.

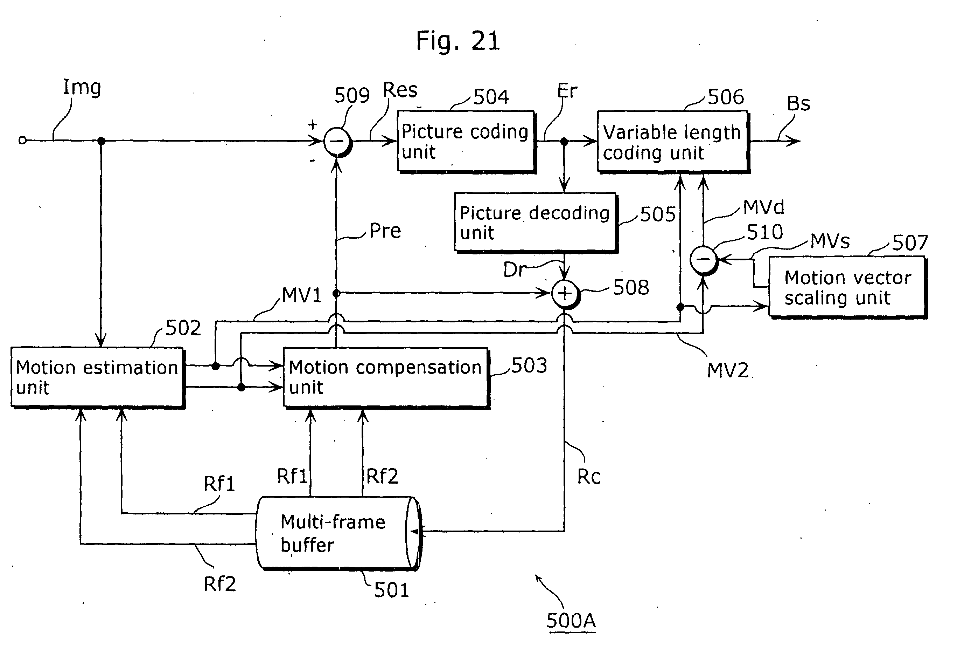

Fig. 21 is a block diagram showing the structure of the moving picture coding apparatus 500A according to the present embodiment.

The moving picture coding apparatus 500A is composed of a multi-frame buffer 501, a motion estimation unit 502, a motion compensation unit 503, a picture coding unit 504, a picture decoding unit 505, a variable length coding unit 506, a motion scaling unit 507, an adder 508, subtracters 509 and 510. Such moving picture coding apparatus 500A divides the frame indicated in the picture signal Img into blocks, and processes the picture on a block-by-block basis.

The multi-frame buffer 501, the motion compensation unit 503, the picture coding unit 504, the picture decoding unit 505, the variable length coding unit 506, the motion vector scaling unit 507, the adder 508, the subtracters 509 and 510 of the present embodiment have respectively the same function and structure as the multi-frame buffer 801, the motion compensation unit 803, the picture coding unit 804, the picture decoding unit 805, the variable length coding unit 806, the motion vector scaling unit 807, the adder 808, the subtracters 809 and 810 of the conventional moving picture coding apparatus 800.

Namely, the present embodiment is characterized by a method of estimating motion vectors performed by the motion estimation unit 502, and thereby, the processing such as a method of coding motion vectors is as same as the one operated by the moving picture coding apparatus 800.

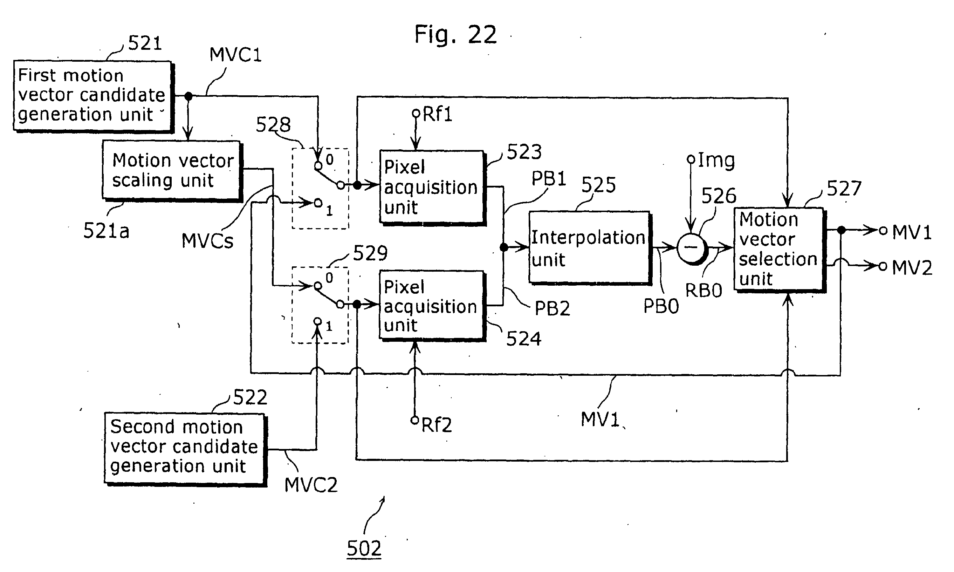

Fig. 22 is a block diagram showing the structure of the motion estimation unit 502 according to the present embodiment.

The motion estimation unit 502 is composed of a first motion vector candidate generation unit 521, a second motion vector candidate generation unit 522, a motion vector scaling unit 521a, pixel acquisition units 523, 524, an interpolation unit 525, a subtracter 526, a motion vector selection unit 527 and switches 528, 529.

The first motion vector candidate generation unit 521, the motion vector scaling unit 521a, the pixel acquisition units 523, 524, the interpolation unit 525 and the subtracter 526 in the motion estimation unit 502 have respectively the same function and structure as the first motion vector candidate generation unit 421, the motion vector scaling unit 422, the pixel acquisition units 423 and 424, the interpolation unit 425 and the subtracter 426 in the motion estimation unit 402 according to the third embodiment.

The second motion vector candidate generation unit 522 then extracts all the candidates for the motion vector MV2 from a predetermined motion vector search range based on the reference frame Rf2 of the current block, and outputs them respectively as a second motion vector candidate MVC2.

The motion estimation unit 402 according to the third embodiment, as already mentioned above, generates some first motion vector candidates MVC1, and motion vectors MVCs by performing scaling on the respective first motion vector candidates MVC1, and estimates the first motion vector candidate MVC1 and the motion vector MVCs corresponding to it, based on which the smallest prediction error evaluation value is calculated, as motion vectors MV1 and MV2. Namely, the motion estimation unit 402 estimates the motion vector MV1 on which the scaling is performed, as a motion vector MV2.

The motion estimation unit 502 according to the present embodiment estimates the motion vector MV1 in the same manner as the motion estimation unit 402 according to the third embodiment. The motion estimation unit 502, however, characterizes in that it estimates further a motion vector MV2 based on which the smallest prediction error evaluation value is calculated, using the estimated motion vector MV1, but not using the motion vector MV1 on which the scaling is performed, as a motion vector MV2.

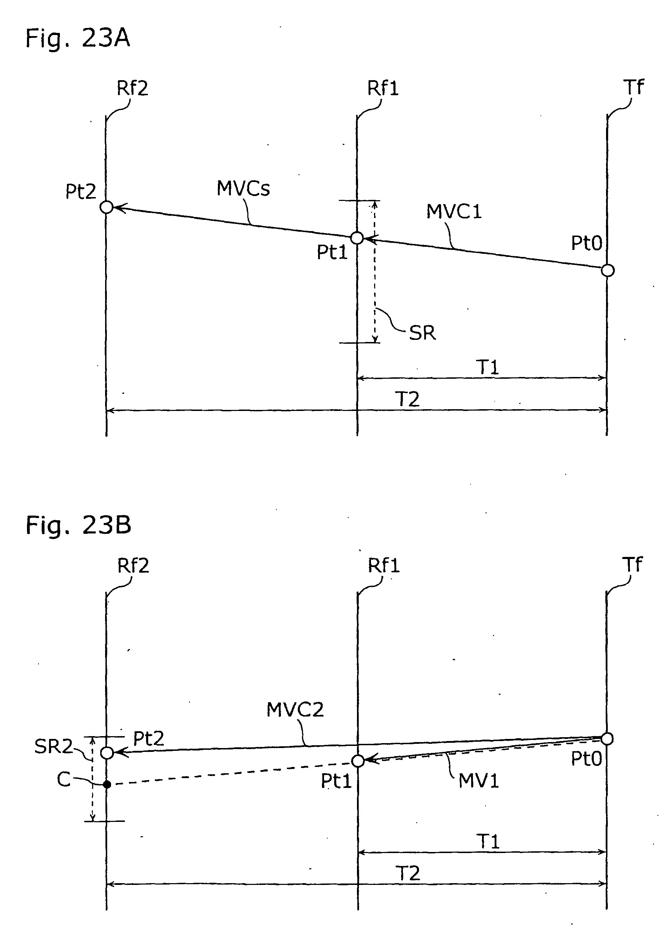

The operation of the motion estimation unit 502 as such is explained in detail with reference to Figs 22, 23A and 23B.

When the switches 528 and 529 are shifted to the side "0", the motion estimation unit 502 generates a first motion vector candidate MVC1 as well as a motion vector MVCs in the same manner as described in the third embodiment so as to estimate a motion vector MV1.

Fig, 23A is an illustration for explaining a method of generating a first motion vector candidate MVC1 and a motion vector MVCs.

The first motion vector candidate generation unit 521 generates any one first motion vector candidate MVC1 from the motion vector search range SR in the reference frame Rf1.

The motion vector scaling unit 521a performs scaling on the first motion vector candidate MVC1 by multiplying the first motion vector candidate MVC1 generated as described above by a ratio of the display time difference T2 to the display time difference T1 (T2/T1), and generates a motion vector MVCs.

The pixel acquisition unit 523 acquires a block (the block including the pixel Pt1) in the reference frame Rf1 indicated by the first motion vector candidate MVC1, and outputs it as a predictive block PB1 to the interpolation unit 525.

The pixel acquisition unit 524 acquires a block (the block including the pixel Pt2) in the reference frame Rf2 indicated by the motion vector candidate MVCs and outputs it as a predictive block PB2 to the interpolation unit 525.

The interpolation unit 525 generates an interpolation predictive block PB0 with respect to the current block by interpolating each pixel value using two pixels whose relative positions in the respective predictive blocks PB1 and PB2 are same.

The subtracter 526 calculates a difference between the pixels values of the pixels in the current block indicated in the picture signal Img and those in the interpolation predictive block PB0, and outputs the result as a prediction error block RB0 to the motion vector selection unit 527. The motion vector selection unit 527 obtains the prediction error block RB0 and calculates the prediction error evaluation value by means of the SAD and the SSD.

The motion vector selection unit 527 then selects the first motion vector candidate MVC1 and the motion vector candidate MVCs, based on which the smallest prediction error evaluation value is obtained, and outputs the selected first motion vector candidate MVC1 as a motion vector MV1 for the current block, which is obtained based on the reference frame Rf1.

When the switches 528 and 529 are switched to the side "1", the motion estimation unit 502 estimates the motion vector MV2 based on which the smallest prediction error evaluation value is obtained using the motion vector MV1 estimated as described above.

Fig. 23B is an illustration for explaining a method of generating a second motion vector candidate MVC2.

The second motion vector candidate generation unit 522 generates subsequently some second motion vector candidates MVC2 from the motion vector search range SR2 which has a central position C in the reference frame Rf2 indicated based on the scaled motion vector MV1.

The pixel acquisition unit 523 acquires a block in the reference frame Rf2 indicated by the second motion vector candidate MVC2 and outputs it as a predictive block PB2 to the interpolation unit 525.

The interpolation unit 525 generates an interpolation predictive block PB0 for the current block by interpolating the pixel values of two pixels whose relative positions in the respective predictive blocks PB1 and PB2 are same, and outputs it to the subtracter 526.

The subtracter 526 calculates a differential between the pixel values of the pixels in the current block and those in the interpolation predictive block PB0, and outputs the result as a prediction error block RB0 to the motion vector selection unit 527.

The motion vector selection unit 527 acquires the prediction error block RB0 from the subtracter 526 and then calculates the prediction error evaluation value with the use of the SAD and the SDD.

The motion vector selection unit 527 selects the second motion vector candidate MVC2 based on which the smallest prediction error evaluation value is obtained, and outputs the selected second motion vector candidate MVC2, as a motion vector for the current block, which is obtained based on the reference frame Rf2.

Here, assuming that the movement of the object is constant between frames, the closer the pixel Pt2 is to the position C indicated by the scaling of the motion vector MV1 that is already estimated, the higher the possibility that a motion vector MV2 exists.

Therefore, in estimating a motion vector MV2, the motion estimation unit 502 according to the present embodiment sets a motion vector search range SR2 that has the position C in the center. Thus, the motion vector search range SR2 can be made smaller since a second motion vector candidate MVC2 is generated within the range and efficiency in estimating motion vectors can be improved. With the use of a method such as a spiral search, the motion vector MV2 can be estimated with higher speed.

It should be noted that, in the present embodiment, the motion vector MV2 is estimated after the estimation of the motion vector MV1, using the motion vector MV1 as a fixed value. A motion vector MV1 can be further estimated again with the use of the motion vector MV2 thus estimated as a fixed value. In this case, the pixel acquisition unit 523 acquires, from the motion vector candidate generation unit 521, some invariable motion vector candidates MVC1 extracted from the predetermined motion vector search range while the pixel acquisition unit 524 has already acquired the fixed motion vector MV2 that is already estimated. The motion vector selection unit 527 then estimates the first motion vector candidate MVC1, based on which the smallest prediction error evaluation value is obtained out of the extracted first motion vector candidates MVC1, as a motion vector MV1. Thus, optimal motion vectors can be estimated, and thereby, the estimation efficiency can be improved.

Furthermore, a motion vector MV2 can be estimated again by using the motion vector MV1 thus estimated again as a fixed value. Such estimation of the motion vectors may be repeated again either until the number of repetition times reaches a predetermined number or until a pace of decrease of the prediction error evaluation value goes below a predetermined value.

Thus, in the present embodiment, the prediction error evaluation value is calculated based on the result of interpolating the pixel values as described in the first and third embodiments. Therefore, even when a fade occurs, the increase of the prediction error evaluation value caused by the fade is prevented so as to estimate the optimal motion vectors. The present embodiment uses independent motion vectors for each reference frame, which is different from the third embodiment. The prediction efficiency can be therefore improved even in the case where the movement is not constant between frames.

(Variation)

The following describes a variation of the moving picture coding apparatus 500A according to the present embodiment described above.

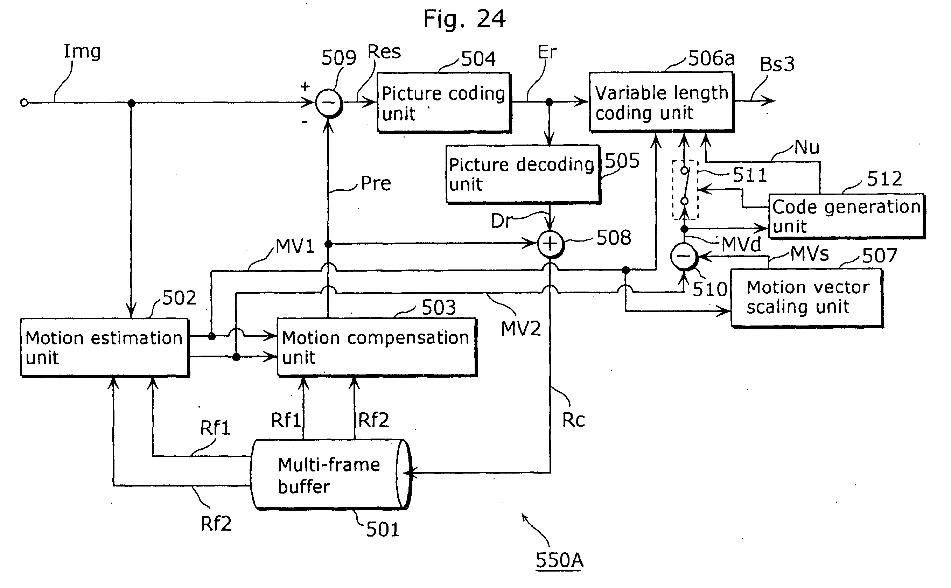

Fig. 24 is a block diagram showing the structure of the moving picture coding apparatus 550A according to the variation.

The moving picture coding apparatus 550A according to the variation includes the motion estimation unit 502, the motion compensation unit 503 of the moving picture coding apparatus 500A and others such as a code generation unit 512 for generating a code Nu indicating "1" or "2" according to a differential vector MVd outputted from the subtracter 510, and a switch' 511 for opening and closing a connection between the subtracter 510 and a variable length coding unit 506a.

The code generation unit 512 obtains the differential vector MVd from the subtracter 510 and then judges whether or not the differential vector MVd indicates "0". When it indicates "0", the code generation unit 512 prevents the variable length coding unit 506a from obtaining the differential vector MVd by leaving the switch 511 open, generates a code Nu indicating "1", and outputs it to the variable length coding unit 506a. Unless the differential vector MVd is "0", the code generation unit 512 allows the variable length coding unit 506a to obtain the differential vector MVd by closing the switch 511, generates a code Nu indicating "2", and outputs it to the variable length coding unit 506a.

When the code Nu indicates "1", the variable length coding unit 506a according to the variation performs variable length coding on the coded residual signal Er, the motion vector MV1 and the code Nu. When the code Nu indicates "2", the variable length coding unit 506a performs variable length coding on the coded residual signal Er, the motion vector MV1, the differential vector MVd and the code Nu. That is to say that the variable length coding unit 506a does not code the differential vector MVd when the code Nu indicates "1", that is, when the differential vector MVd indicates "0". The variable length coding unit 506a then outputs the result of the variable length coding as described above, as a coded picture signal Bs3.

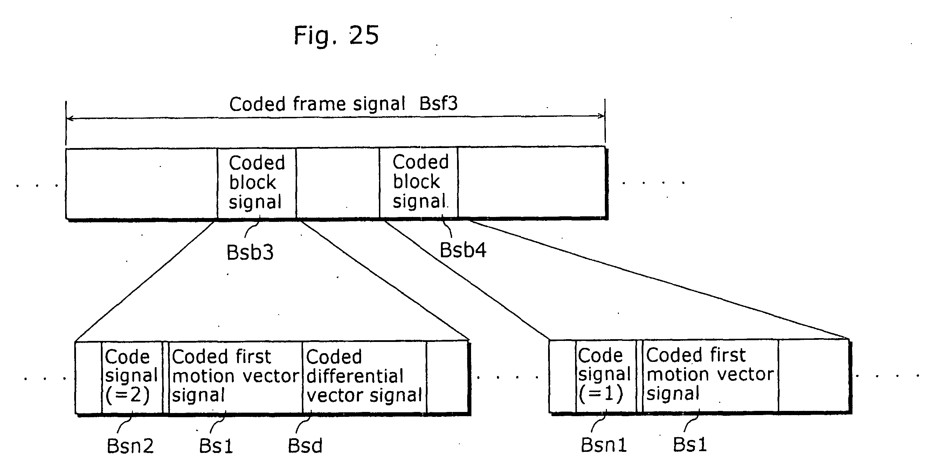

Fig. 25 is a conceptual diagram showing the concept of the format of the coded picture signal Bs3.

The coded picture signal Bs3 includes a coded frame signal Bsf3 indicating the coded frame while the coded frame signal Bsf3 includes coded block signals Bsb3 and Bsb4 indicating the coded blocks. The coded block Bsb3 further includes a code signal Bsn2 indicating the coded code Nu ("2"), a coded first motion vector Bs1 indicating the coded motion vector MV1 and a coded differential vector signal Bsd indicating the coded differential vector MVd. The coded block signal Bsb4 further includes a code signal Bsn1 indicating the coded code Nu ("1") and a coded first motion vector signal Bs1 indicating the coded motion vector MV1.

Namely, the coded block signal Bsb3 includes the code signal Bsn2 and the coded differential vector signal Bsd besides the coded first motion vector signal Bs1 since the differential vector MVd is not "0" for the block indicated by the coded block signal Bsb3, while the coded block signal Bsb4 includes only the code signal Bsn1 besides the coded first motion vector signal Bs1 since the differential vector MVd is "0" for the block indicated by the coded block signal Bsb4.

Here, 1 bit is sufficient for the information amount for the code Nu since the code Nu indicates either "1" or "2". However, the information amount for the differential vector MVd requires at least 2 bits in the case of performing variable length coding on the differential vector MVd in horizontal component' and vertical component separately. For many of the cases, the movement of the object on the screen during a short period of time is constant. Most of the differential vectors MVd for the current block therefore indicate "0".

Accordingly, in the present variation, the coded picture signal Bs3 includes many coded block signals Bsb4, whose information amount is reduced by omitting the coded differential vector signal Bsd, so that coding efficiency can be improved.

When most of the differential vectors MVd for the current block indicate "0", the apparition frequency of the value indicated by the code Nu is irregular and thereby the information amount for the code Nu becomes smaller than 1 bit. Consequently, in the case of coding motion vectors based on the variable length coding method that is integer bit-oriented such as Huffman codes, coding efficiency can be achieved more, by using the code Nu combined with other types of codes, than in the case of coding the code Nu independently as described above.

It should be noted that in the present embodiment, the code signals Bsn1 and Bsn2 are stored in each coded block signal, however, they can be stored in each signal indicating that a picture is coded using a unit bigger than a block such as a macroblock or a slice used in the MPEG. In this way, the information amount for the code signals Bsn1 and Bsn2 can be reduced and thereby coding efficiency can be further achieved.

According to the variation described above, the information amount can be reduced by storing the information on the code signal Bsn1 in the coded picture signal Bs3 so as to abbreviate the coded differential vector signal Bsd, and thereby the coding efficiency can be improved.

(Sixth embodiment)

The following describes a moving picture decoding apparatus according to the sixth embodiment of the present invention with reference to the diagrams.

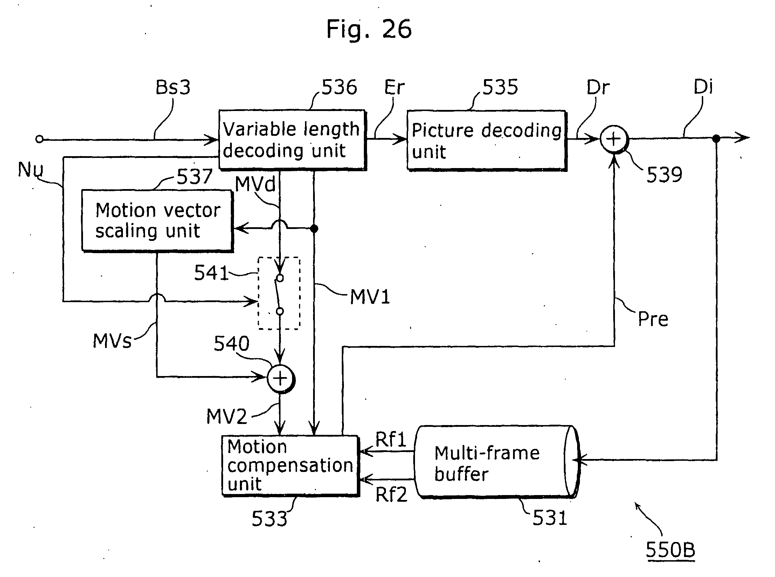

Fig. 26 is a block diagram showing the structure of the moving picture decoding apparatus 550B according to the present embodiment.

The moving picture decoding apparatus 550B according to the present embodiment decodes the moving picture coded by the moving picture coding apparatus 550A according to the variation of the fifth embodiment, and is composed of a variable length decoding unit 536, a motion vector scaling unit 537, a motion compensation unit 533, a picture decoding unit 535, a multi-frame buffer 531, adders 539, 540, and a switch 541.

The picture decoding unit 535, the motion compensation unit 533, the multi-frame buffer 531 and adders 539, 540 according to the present embodiment have respectively the same function and the structure as the picture decoding unit 905, the motion compensation unit 903, the multi-frame buffer 901 and the adders 909, 910 in the moving picture decoding apparatus 900 shown in the conventional example so that the explanation is thereby omitted here.

The variable length decoding unit 536 according to the present embodiment obtains a coded picture signal Bs3, performs variable length decoding on it and, outputs the code Nu, the coded residual signal Er and the motion vector MV1, when the code Nu indicates "1", but outputs the code Nu, the coded residual signal Er, the motion vector MV1 and the differential vector MVd when the code Nu indicates "2".

The switch 541 opens and closes the connection between the variable length decoding unit 536 and the adder 540 according to the code Nu sent from the variable length decoding unit 536. Namely, the switch 541 opens when the code Nu indicates "1" so as to prevent the variable length decoding unit 536 from outputting the differential vector MVd to the adder 540, and closes when the code Nu indicates "2" so as to allow the variable length decoding unit 536 to output the differential vector MVd to the adder 540.

As a result, when the switch 541 opens, the adder 540 obtains only the motion vector MVs generated by the motion vector scaling unit 537, and therefore, outputs the motion vector MVs as a motion vector MV2 to the motion compensation unit 533. When the switch 541 closes, the adder 540 obtains the motion vector MVs generated by the motion vector scaling unit 537 and the differential vector MVd outputted from the variable length decoding unit 536, therefore, adds the differential vector MVd to the motion vector MVs, and outputs the calculation as a motion vector MV2 to the motion compensation unit 533.

Thus, in the present embodiment, when the coded picture signal Bs3 includes information containing the differential vector MVd, a motion vector MV2 is generated by adding the scaling processed motion vector MVs to the differential vector MVd and when the coded picture signal Bs3 does not include such information, a motion vector MV2 is generated by determining the scaling processed motion vector MVs as a motion vector MV2.

According to the present embodiment, it is possible to decode correctly the information on the motion vectors coded by the moving picture coding apparatus 550A according to the variation of the fifth embodiment, and as a result, the moving picture can be decoded correctly.

(Seventh embodiment)

In the motion vector coding method employed by the moving picture coding apparatus 800 shown in the conventional example, the scaling is performed on the motion vector MV1. There is, however, a problem that motion vectors cannot be coded in a case where information on the display time differences T1 and T2 necessary for scaling cannot be obtained from the multi-frame buffer 801. It is also a problem that, even when the information on the display time differences T1 and T2 are obtained from the multi-frame buffer 801, it is useless to perform scaling and thereby efficiency in coding motion vectors is low, in a case where at least either the display time difference T1 or T2 is extremely large.

This means that two types of areas, a short-term buffer and a long term buffer, are allocated in the multi-frame buffer 801. In some cases, the long-term buffer stores a frame without information on display time. When such frame is read out as a reference frame, the scaling cannot be performed. In other cases, the long-term buffer stores a frame whose display time greatly differs from that of the current frame. When such frame is read out as a reference frame, a meaningless scaling is to be performed.

The moving picture coding apparatus according to the seventh embodiment of the present invention characterizes in that it codes in such way to avoid the meaningless scaling and improve the efficiency in coding motion vectors.

The following describes the moving picture coding apparatus according to the seventh embodiment of the present invention with reference to the diagrams.

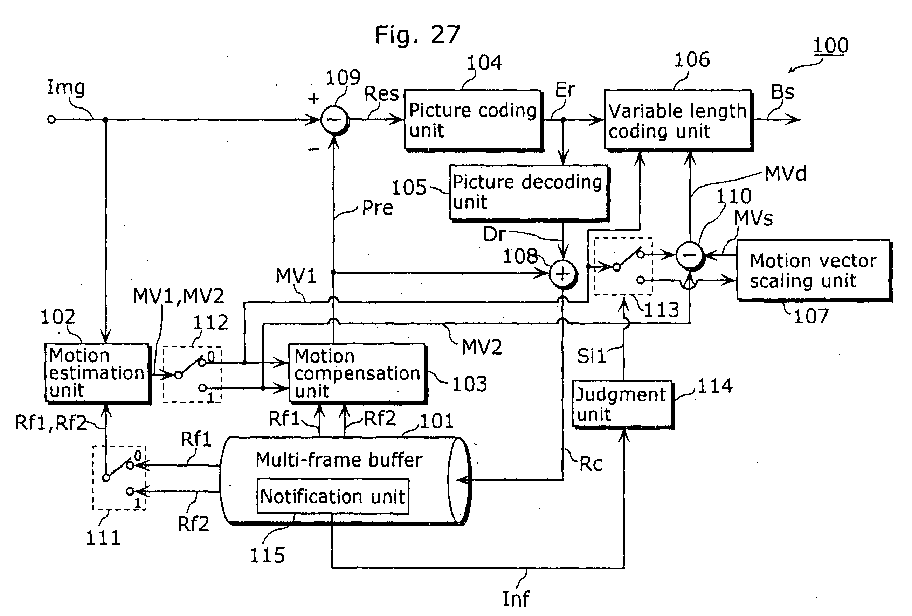

Fig. 27 is a block diagram showing the structure of the moving picture coding apparatus 100 according to the present embodiment.

The moving picture coding apparatus 100 is composed of a multi-frame buffer 101, a motion estimation unit 102, a motion compensation unit 103, a picture coding unit 104, a picture decoding unit 105, and a variable length coding unit 106, a motion vector scaling unit 107 an adder 108, subtracters 109, 110, switches 111, 112, 113, and a judgment unit 114.

When coding each block in the current frame Tf indicated in the picture signal Img, the moving picture coding apparatus 100 refers to two reference frames Rf1 and Rf2, and codes information on the motion vectors MV1 and MV2 of the current block with respect to these reference frames Rf1, Rf2 and information based on the predictive picture predicted using the reference frames Rf1 and Rf2 as well as motion vectors MV1 and MV2.

Here, as in the first embodiment, the respective reference frames Rf1 and Rf2 can be located temporally forward or backward of the current frame Tf.

The moving picture coding apparatus 100 may refer to the followings: frames located forward of the current frame Tf, as reference frames Rf1 and Rf2, as shown in Fig. 10A; frames located backward of the current frame Tf, as reference frames Rf1 and Rf2, as shown in Fig. 10B; a single frame located forward of the current frame Tf as a reference frame Rf2 and a frame located backward of the current frame Tf as a reference frame Rf1, as shown in Fig. 10C.

The switches 111 and 112 shift between the contact points "0" and "1" according to the two frames to be referred to (reference frames Rf1 and Rf2), for each current frame Tf. For example, when the reference frame Rf1 is referred to, the switches 111 and 112 connect respectively the contact point "0" to the motion estimation unit 102, and when the reference frame Rf2 is referred to, the switches 111 and 112 connect respectively the contact point "1" to the motion estimation unit 112.

The motion estimation unit 102 estimates the motion vectors MV1 and MV2 with respect to the blocks in the current frame Tf indicated in the picture signal Img, based on the respective reference frames Rf1 and Rf2 read out from the multi-frame buffer 101, in the same manner as the motion estimation unit 302 according to the first embodiment, the motion estimation unit 402 according to the third embodiment or the motion estimation 502 according to the fifth embodiment.

The motion compensation unit 103 takes out from the multi-frame buffer 101 the block located in the position indicated by the motion vector MV1 with respect to the reference frame Rf1 and the block located in the position indicated by the motion vector MV2 with respect to the reference frame Rf2. The motion compensation unit 103 then generates a predictive picture signal Pre by performing pixel interpolation processing based on these blocks and outputs it.

The subtracter 109 subtracts the predictive picture signal Pre from the picture signal Img and outputs a residual signal Res.

The picture coding unit 104 obtains the residual signal Res, performs picture coding processing such as DCT transformation and quantization, and outputs a coded residual signal Er including quantized DCT coefficients and others.

The picture decoding unit 105 obtains the coded residual signal Er, performs picture decoding processing such as inverse quantization and inverse DCT transformation, and outputs a decoded residual signal Dr.

The adder 108 adds the decoded residual signal Dr to the predictive image signal Pre, and outputs a reconstructed picture signal Rc.

The multi-frame buffer 101 stores the signal having the possibility to be used for reference in the inter-frame prediction, out of the reconstructed picture signal Rc.

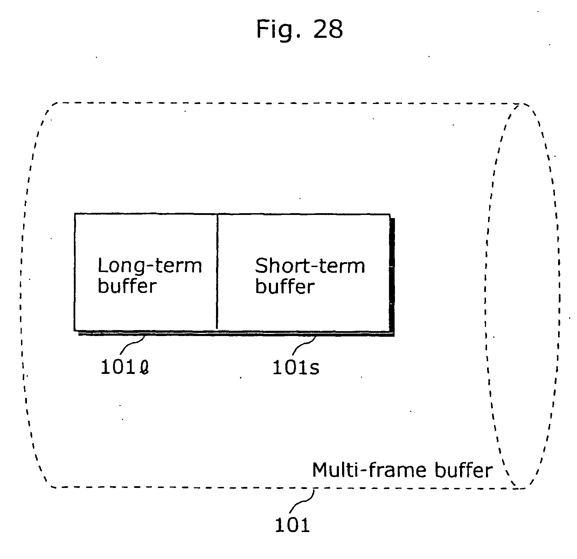

Fig. 28 is a block diagram showing the sketchy structure of the memory for storing the signals mentioned above in the multi-frame buffer101.

As shown in Fig. 28, in the multi-frame buffer 101, a short-term buffer 101s and a long-term buffer 101l are allocated, and the frames indicated by the reconstructed picture signal Rc are classified and stored accordingly in the short-term buffer 101s and the long-term buffer 101l.

The short-term buffer 101s is a memory using a first-in first-out (FIFO) method. When a new signal is stored in the short-term buffer 101s, the stored contents is released starting from the one whose storing time is the oldest so that a certain numbers of new frames are stored in the short-term buffer 101s at any time. When the frame indicated by the reconstructed picture signal Rc is stored in the short-term buffer 101s, information on display time of frames is also stored.

The long-term buffer 101l, a memory using a random access method, sores a frame in an arbitrary area and has a structure that is capable of reading out the frame stored in the arbitrary area. The long-term buffer 101l mainly stores the frames to be referred to for a long time such as a background picture and a picture before scene insertion, and also stores the frames to be referred to longer than those stored in the short-term buffer 101s. The storage of the frames in the long-term buffer 101l takes place when the frames stored in the short-term buffer 101s are moved to the long-term buffer 101l.

Furthermore, when the frame indicated by the reconstructed picture signal Rc is stored in the long-term buffer 101l, it can be stored together with information on display time of frames or without the information on time.

The multi-frame buffer 101 according to the present embodiment includes a notification unit 115 which outputs a notification signal Inf indicating whether the reference frames Rf1 and Rf2 which are read out by the motion estimation unit 102 via the switch 111 are read out from the short-term buffer 101s or the long-term buffer 101l.

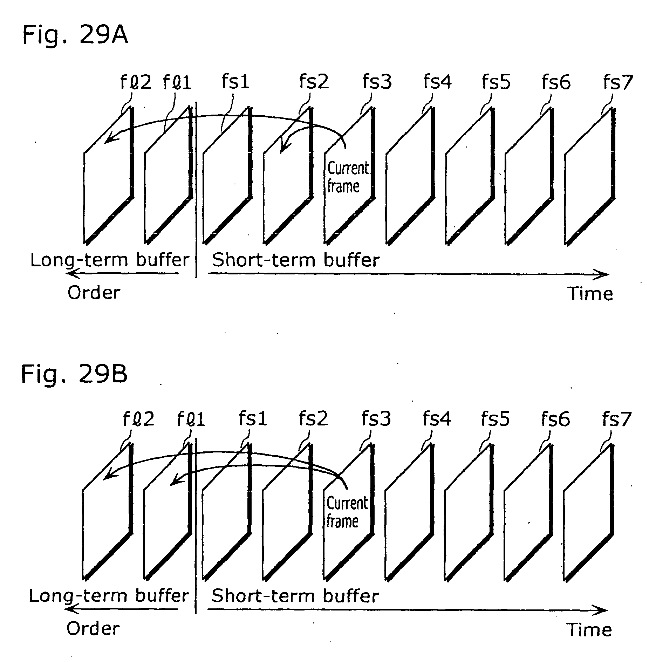

Figs. 29A and 29B are status diagrams respectively showing the status of the frames stored in the multi-frame buffer 101.

In the short-term buffer 101s, frames fs1, fs2 and fs3 are stored one by one as the time goes by while frames fl1 and fl2, which have the potential to be referred to later out of the frames stored in the short-term buffer 101s, are stored subsequently in the long-term buffer 101l.

As shown in Fig. 29A, when the frame fs2 stored in the short-term buffer 101s is read out as a reference frame Rf1 from the multi-frame buffer 101, the notification unit 115 in the multi-frame buffer 101 outputs the notification signal Inf notifying that the frame is read out from the short-term buffer 101s. When the frame fl2 stored in the long-term buffer 1011 is read out as a reference frame Rf2 from the long-term buffer 101l, the notification unit 115 outputs the notification signal Inf notifying that the frame is read out from the long-term buffer 101l.

Similarly, as shown in FIG. 29B, when the frames fl1 and fl2 which are stored in the long-term buffer 101l are read out respectively as reference frames Rf1 and Rf2 from the multi-frame buffer 101, the notification unit 115 outputs the notification signal Inf notifying that the frame is read out from the long-term buffer 101l each time the respective frames fl1 and fl2 are read out.

The judgment unit 114 obtains the notification signal Inf from the notification unit 115, and judges whether or not at least one of the reference frames Rf1 and Rf2 to be referred to per current block is read out from the long-term buffer 101l. The judgment unit 114 then outputs a switching signal si1 for instructing the switch 113 to switch the contact point based on the result of the judgment.

The switch 113 switches between the motion vector scaling unit 107 and the subtracter 110 for the destination of the motion vector MV1 outputted from the motion estimation unit 102, by switching the contact point according to the switching signal si1 mentioned above.

Namely, when judging that the reference frames Rf1 and Rf2 are read out from the short-term buffer 101s, the judgment unit 114 outputs a switching signal si1 instructing that the destination of the output operated by the switch 113 is the motion vector scaling unit 107. When judging that at least one of the reference frames Rf1 and Rf2 is read out from the long-term buffer 101l, the judgment unit 114 outputs a switching signal si1 instructing that the destination of the output operated by the switch 113 is the subtracter 110.

The motion vector scaling unit 107, as in the operation described with reference to Fig. 5, performs scaling on the motion vector MV1 based on the T1 that is a difference in display time between the current frame Tf and the reference frame Rf1 as well as the T2 that is a difference in display time between the current frame Tf and the reference frame Rf2, and outputs the motion vector MVs generated as a result of the scaling.

When the destination of the output operated by the switch 113 is set to the motion vector scaling unit 107, the subtracter 110 obtains a difference between the motion vector MV2 obtained from the motion estimation unit 102 and the motion vector MVs obtained from the motion vector scaling unit 107, and outputs a differential vector MVd indicating the result.

When the destination of the output is set to the subtracter 110 itself, the subtracter 110 obtains a difference between the motion vectors MV2 and MV1 using the motion vector MV1 obtained from the motion estimation unit 102 via the switch 113 instead of using the motion vector MVs obtained from the motion vector scaling unit 107, and then outputs the difference, as a differential vector MVd.

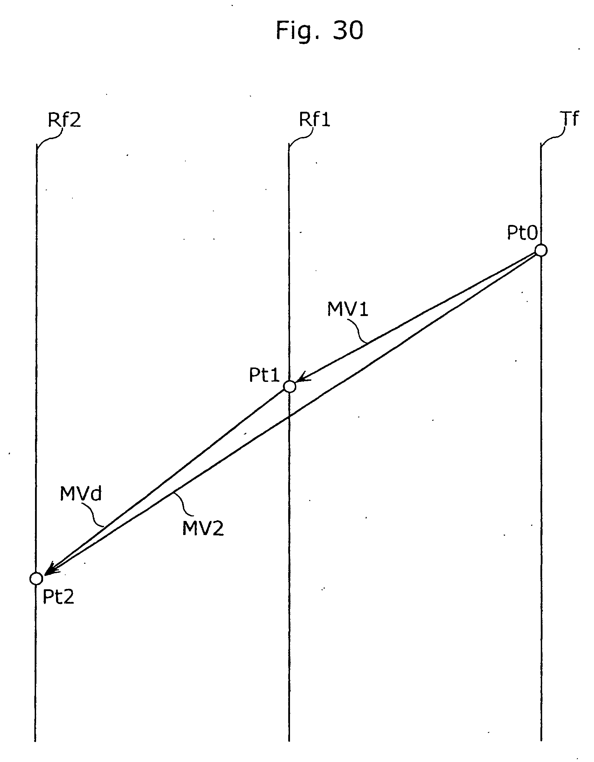

Fig. 30 is an illustration for explaining how the differential vector MVd is generated.

As shown in Fig. 30, when obtaining the motion vector MV1 instead of the motion vector MVs, the subtracter 110 obtains a difference between the motion vectors MV2 and MV1, and generates a differential vector MVd,.

The variable length coding unit 106 performs variable length coding on the differential vector MVd, the motion vector MV1 and the coded residual signal Er, and outputs the result, as a coded picture signal Bs.

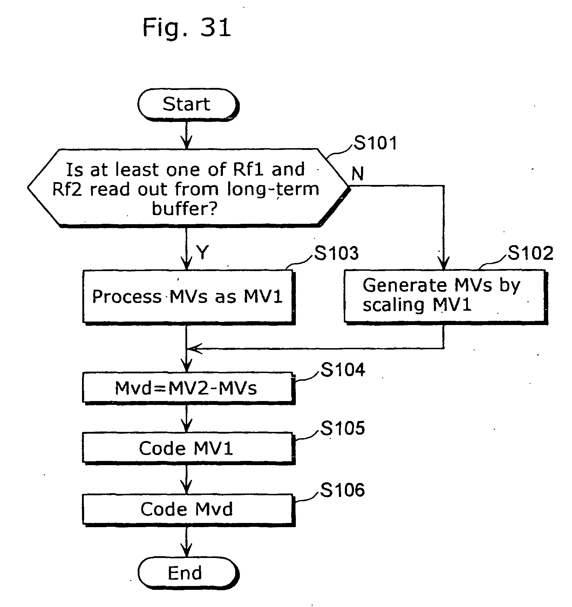

A sequence of operations for coding motion vectors, performed by the moving picture coding apparatus 100 according to the present embodiment as described above, is explained with reference to Fig. 31.

Fig. 31 is a flowchart showing the sequence of operations for coding motion vectors.

Firstly, the judgment unit 114 in the moving picture coding apparatus 100 judges whether or not at least one of the reference frames Rf1 and Rf2 is read out from the long-term buffer 101l, based on the notification signal Inf (Step S101).

When judging that two frames of reference frames Rf1 and Rf2 are read out from the short-term buffer 101s (N in Step S101) the judgment unit 114 then allows the contact point of the switch 113 to be switched so that the destination of the output operated by the switch 113 is the motion vector scaling unit 107. As a result, the motion vector scaling unit 107 generates a motion vector MVs by obtaining the motion vector MV1, and performs scaling on it (Step S102). Then, the subtracter 110 obtains the generated motion vector MVs.

When judging that at least one of the reference frames Rf1 and Rf2 is read out from the long-term buffer 101l (Y in Step S101), the judgment unit 114 allows the contact point of the switch 113 to be switched so that the destination of the output operated by the switch 113 is the subtracter 110. As a result, the subtracter 110 processes the motion vector MV1 that is obtained from the motion estimation unit 102 via the switch 113, as the motion vector MVs outputted from the motion vector scaling unit 107 (Step S103).

Then, the stubtractor 110 obtains a difference between the motion vector MV2 and the motion vector MVs, and outputs, to the variable length coding unit 106, a differential vector MVd indicating the difference (Step S104).

The variable length coding unit 106 then performs variable length coding on the motion vector MV1 obtained from the motion estimation unit 102 (Step S105) as well as the differential vector MVd obtained from the subtracter 110 (Step S106).

Thus, in the present embodiment, when at least one of the two reference frames Rf1 and Rf2 is read out from the long-term buffer 101l, the motion vector scaling unit 107 does not perform scaling: Therefore, even when the information on-display time of frames is stored in the long-term buffer 101l, an execution of the meaningless scaling using the information can be omitted and thereby efficiency in coding motion vectors can be improved. When the information on display time of frames is not stored in the long-term buffer 101l, the operation for impossible scaling is omitted and the efficiency in coding motion vectors can be achieved.

In the present embodiment, the shifting of the switch 113 controls the scaling performed by the motion vector scaling unit 107, however, the structure of the moving picture coding apparatus can be without the switch 113 as shown in Fig. 3 so that the motion vector scaling unit 107 does not perform scaling when at least one of the two reference frames Rf1 and Rf2 is read out from the long-term buffer 101l.

Also, in the present embodiment, when at least one of the two reference frames Rf1 and Rf2 is read out from the long-term buffer 101l, the moving picture coding apparatus 100 codes the motion vector MV1 and the differential vector MVd. The moving picture coding apparatus 100, however, can code the motion vectors MV1 and MV2 without obtaining the differential vector MVd. This means that the moving picture coding apparatus 100 codes the motion vector MV2 instead of the differential vector MVd when at least one of the two reference frames Rf1 and Rf2 is read out from the long-term buffer 101l. In this case, the moving picture coding apparatus 100 can obtain predictive values of the motion vectors MV1 and MV2 using the blocks neighboring the current block, calculate respective differentials between the respective obtained predictive values and the respective motion vectors MV1, MV2, and code the respective differentials.

In the present embodiment, the notification unit 115 is included in the multi-frame buffer 101, but it may be included in another component other than the multi-frame buffer 101 or may be set independently.

(Eighth embodiment)

The following describes the moving picture decoding apparatus according to the eighth embodiment of the present invention with reference to the diagrams.

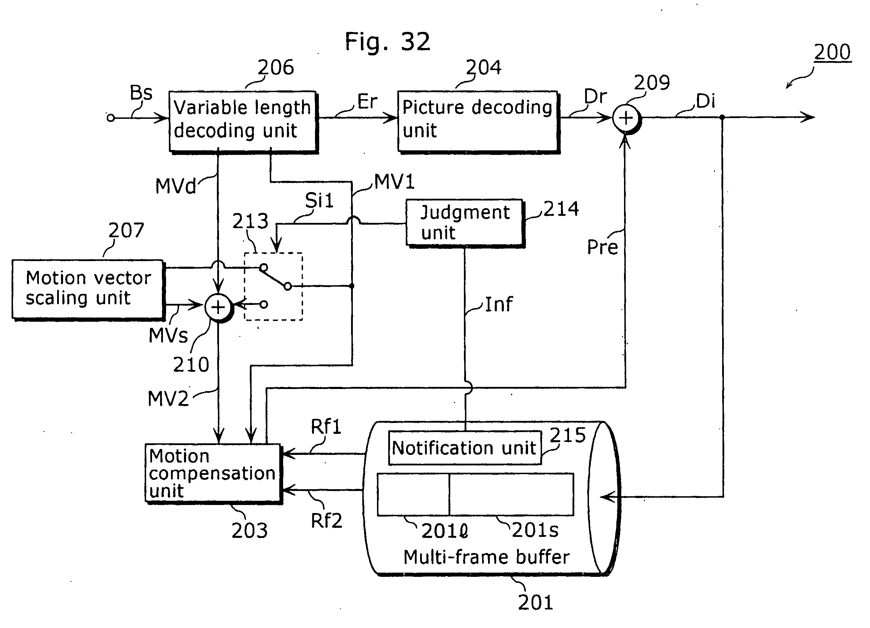

Fig. 32 is a block diagram showing the structure of the moving picture decoding apparatus 200 according to the present embodiment.

The moving picture decoding apparatus 200 according to the present embodiment decodes the moving picture coded by the moving picture coding apparatus 100 according to the seventh embodiment, and is composed of a variable length decoding unit 206, a motion vector scaling unit 207, a motion compensation unit 203, a picture decoding unit 204, a multi-frame buffer 201, a judgment unit 214, adders 209, 210 and a switch 213.

The variable length decoding unit 206 obtains a coded picture signal Bs, performs variable length decoding on it, and outputs a coded residual signal Er, a motion vector MV1 and a differential vector MVd.

The picture decoding unit 204 obtains the coded residual signal Er, performs picture decoding processing such as inverse quantization and inverse DCT transformation to it, and outputs a decoded residual signal Dr.

The motion compensation unit 203, in the same manner as the motion compensation unit 103 mentioned in the first embodiment, extracts from the multi-frame buffer 201, the block indicated by the motion vector MV1 in the reference frame Rf1 and the block indicated by the motion vector MV2 in the reference frame Rf2. The motion compensation unit 203 then performs pixel interpolation processing based on these blocks, generates a predictive picture signal Pre, and outputs it.

The adder 209 adds the predictive image signal Pre obtained from the motion compensation unit 203 to the decoded residual signal Dr obtained from the picture decoding unit 204, and outputs the result as a decoded picture signal Di.

The motion vector scaling unit 207, in the same manner as the motion vector scaling unit 107 according to the 'seventh embodiment, obtains the motion vector MV1 outputted from the variable length decoding unit 206, performs scaling on it based on the display time difference T1, a difference in display time between the current frame and the reference frame Rf1 as well as the display time difference T2, a difference in display time between the current frame and the reference frame Rf2, and then outputs the motion vector MVs generated as a result of the scaling.

The multi-frame buffer 201 stores the signal having the possibility to be used for reference out of the decoded picture signal Di. A short-term buffer 201s and a long-term buffer 201l are allocated in the multi-frame buffer 201, having the same function and structure as the short-term buffer 101s and the long-term buffer 101l in the multi-frame buffer 101 according to the seventh embodiment. Namely, the frames indicated in the decoded picture signal Di are classified and stored accordingly in the short-term buffer 201s and the long-term buffer 201l.

The multi-frame buffer 201 further includes a notification unit 215 having the same function and structure as the notification unit 115 in the multi-frame buffer 101 according to the seventh embodiment. The notification unit 215 outputs a notification signal Inf notifying whether or not the reference frames Rf1 and Rf2 which are read out by the motion compensation unit 203 are read out from the short-term buffer 201s or from the long-term buffer 201l.

The judgment unit 214 having the same function and structure as the judgment unit 114 according to the seventh embodiment, obtains the notification signal Inf from the notification unit 215, and judges whether or not at least one of the reference frames Rf1 and Rf2 to be used for reference per current block is read out from the long-term buffer 201l. The judgment unit 214 then outputs a switching signal si1 instructing the switch 213 to switch the contact point, based on the result of the judgment.

The switch 213 switches between the motion vector scaling unit 207 and the adder 210 for the destination of the output of the motion vector MV1 obtained from the variable length decoding unit 206, by switching the contact point according to the switching signal si1 described above.

Namely, when judging that the reference frames Rf1 and Rf2 are read out from the short-term buffer 201s, the judgment unit 214 outputs the switching signal si1 instructing the switch 213 so that the destination of the output is the motion vector scaling unit 207.

When judging that at least one of the reference frames Rf1 and Rf2 is read out from the long-term buffer 201l, the judgment unit 214 outputs the switching signal si1 instructing the switch 213 so that the destination of the output is the adder 210.

When the output destination of the switch 213 is set as the motion vector scaling unit 207, the adder 210 adds the motion vector MVd obtained from the variable length decoding unit 206 to the motion vector MVs obtained from the motion vector scaling unit 207, and outputs, to the motion compensation unit 203, a motion vector MV2 indicating the result.

When the adder 210 itself is set as the destination of the output operated by the switch 213, the adder 210 adds the motion vector MVd to the motion vector MV1 using the motion vector MV1 obtained from the variable length decoding unit 206 via the switch 213, instead of the motion vector MVs obtained from the motion vector scaling unit 207, and outputs the result, to the motion compensation unit 203, as a motion vector MV2.

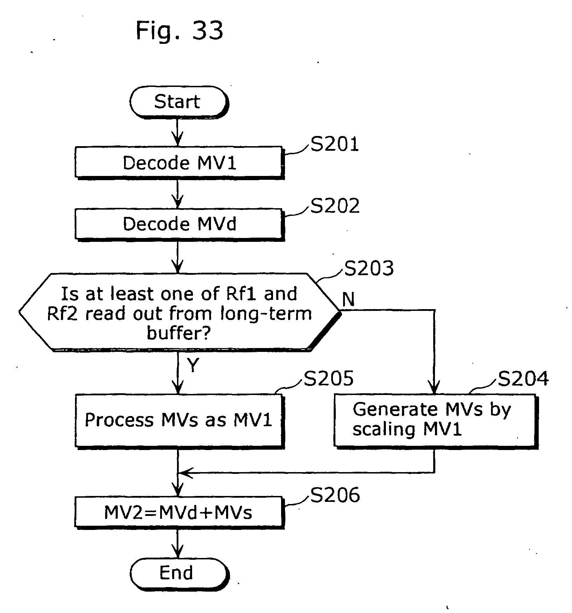

The following describes a sequence of operations for decoding motion vectors, operated by the moving picture decoding apparatus 200 according to the present embodiment, with reference to Fig. 33.

Fig. 33 is a flowchart showing the sequence of operations for decoding motion vectors.

The variable length decoding unit 206 in the moving picture decoding apparatus 200 decodes the motion vector MV1 (Step S201) and the differential vector MVd (Step S202) by obtaining the coded picture signal Bs and performing variable length decoding on it.

Then, the judgment unit 214 judges whether or not at least one of the reference frames Rf1 and Rf2 is read out from the long-term buffer 201l, based on the notification signal Inf (Step S203).

When judging that the two reference frames Rf1 and Rf2 are read out from the short-term buffer 201s (N in Step S203), the judgment unit 214 switches the contact point of the switch 213 so that the destination of the output operated by the switch 213 is the motion vector scaling unit 207. As a result, the motion vector scaling unit 207 obtains the motion vector MV1 and generates a motion vector MVs by performing scaling on the obtained motion vector MV1 (Step S204). Then, the adder 210 obtains the generated motion vector MVs.

The judgment unit 214 switches the contact point of the switch 213 so that the destination of the output is the adder 210 when determining that at least one of the reference frames Rf1 and Rf2 is read out from the long-term buffer 201l (Y in Step S203). As a result, the adder 210 processes the motion vector MV1 obtained from the variable length decoding unit 206 via the switch 213, as the motion vector MVs outputted from the motion vector scaling unit 207 (Step S205).

Then, the adder 210 adds the motion vector MVs to the differential vector MVd, and outputs, to the motion compensation unit 203, the motion vector MV2 indicating the result (Step S206).

Thus, in the present embodiment, as in the seventh embodiment, when at least one of the reference frames Rf1 and Rf2 is read out from the long-term buffer 201l, the motion vector scaling unit 207 does not perform scaling. Therefore, even when the information on display time of frames is stored in the long-term buffer 201l, an execution of the meaningless scaling using the information can be' omitted and thereby efficiency in decoding motion vectors can be improved. Also, when the information on display time of frames is not stored in the long-term buffer 201l, the operation of impossible scaling is omitted, and thereby, the efficiency in decoding motion vectors can be improved.

It should be noted that, in the present embodiment, the shifting operated by the switch 213 controls the scaling performed by the motion vector scaling unit 207, however, the structure of the moving picture decoding apparatus 200 can be without the switch 213, so that when at least one of the two reference frames Rf1 and Rf2 is read out from the long-term buffer 201l, the motion vector scaling unit 207 does not perform scaling.

Also, in the present embodiment, when at least one of the two reference frames Rf1 and Rf2 is read out from the long-term buffer 201l, the moving picture decoding apparatus 200 adds the differential vector MVd to the motion vector MV1 and thereby estimates the motion vector MV2. The moving picture decoding apparatus 200, however, may decode the motion vector MV2 without the addition processing. This means that the moving picture decoding apparatus 200 decodes the motion vector MV2 instead of the differential vector MVd when at least one of the two reference frames Rf1 and Rf2 is read out from the long-term buffer 201l. In this case, when the motion vectors MV1 and MV2 are coded by subtracting the predictive values of the motion vectors MV1 and MV2, which are obtained by using the blocks neighboring the current block, from the respective motion vectors MV1 and MV2, the moving picture decoding apparatus 200 may decode the motion vectors MV1 and MV2 after having added the coded motion vectors MV1 and MV2 to the respective predictive values.

In the present embodiment, the notification unit 215 is included in the multi-frame buffer 201. However, it may be included in another component other than the multi-frame buffer 201 or may be set independently.

It should be noted that the frame described in the aforementioned embodiments 1 through 8 may be a field. The term "picture" can be used as a generic name for both field and frame.

Thus, the motion vector estimation method according to the present invention, the motion vector coding method as well as the motion vector decoding method which are based on said method, and the apparatuses using these methods are described in the first through eighth embodiments. The present invention, however, is not limited to the above-mentioned embodiments and can be surely realized in a different embodiment:

(Ninth embodiment)

Furthermore, the processing shown in each of the above embodiments can be carried out easily in an independent computer system by recording the program for realizing the picture coding/decoding method described in each of the above embodiments onto a storage medium such as a flexible disk or the like.

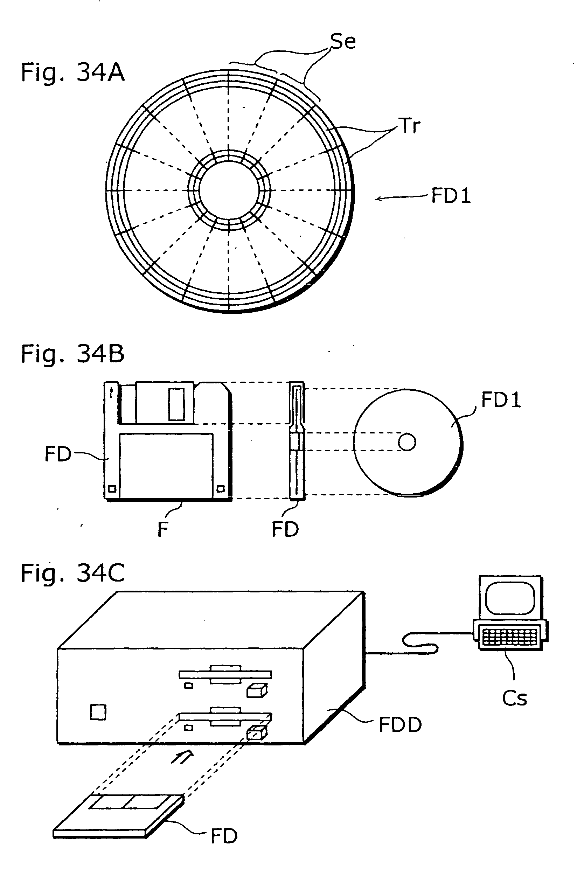

Fig. 34 is an illustration of a storage medium for storing a program in order to realize the motion vector estimation method, the motion vector coding method and the motion vector decoding method described in the first through eighth embodiments in the computer system.

Fig. 34B shows a full appearance of a flexible disk FD, its structure at cross section and a disk body FD1 whereas in Fig. 34A shows an example of the physical format of the disk body FD1 as a main body of a recording medium. The disk body FD1 is contained in a case F, on the surface of which a plurality of tracks Tr are formed concentrically from the periphery to the inside, and each track is divided into 16 sectors Se in the angular direction. Therefore, in the flexible disk FD on which the program is stored, the motion vector coding method and the motion vector decoding method as the program are stored in an area assigned for it on the disk body FD1.

Fig. 34C shows a structure for recording and reading out the program on the flexible disk FD.

When the program is stored on the flexible disk FD The computer system Cs writes in data as the program described above via a flexible disk drive FDD. When the coding apparatus and the decoding apparatus are constructed in the computer system by the program on the flexible disk FD, the program is read out from the flexible disk FD and then transferred to the computer system Cs.

The above explanation is made on an assumption that a recording medium is a flexible disk FD, but the same processing can also be performed using an optical disk. In addition, the recording medium is not limited to a flexible disk and an optical disk, but any other medium such as an IC card, a ROM cassette, or the like capable of recording a program can be used.

(Tenth embodiment)

The following describes the applications of the motion vector estimation method, the motion vector coding method and' the motion vector decoding method illustrated in the above-mentioned embodiments and a system using them.

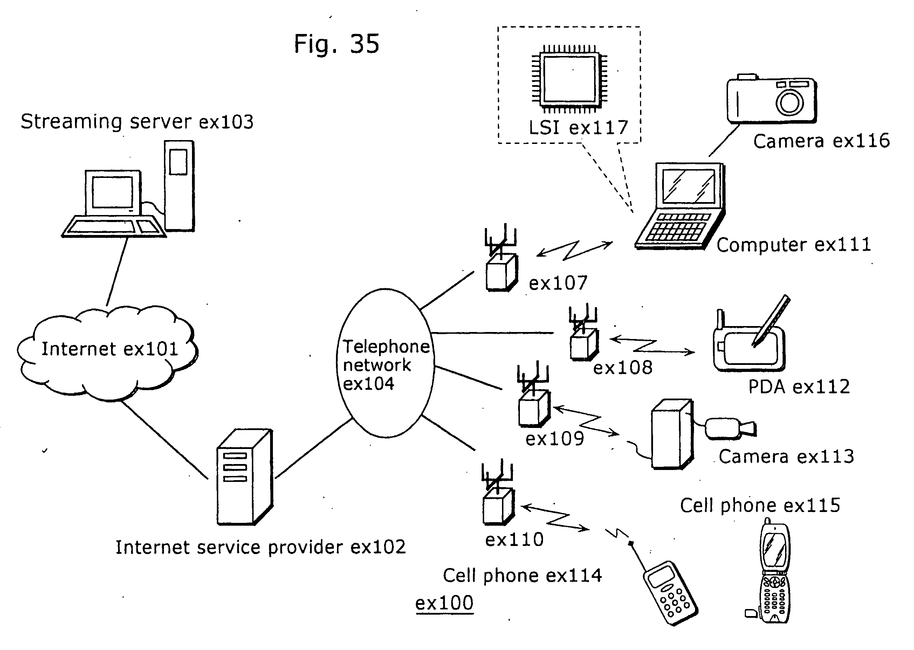

Fig. 35 is a block diagram showing an overall configuration of a content supply system ex100 for realizing content distribution service. The area for providing communication service is divided into cells of desired size, and cell sites ex107~ex110 which are fixed wireless stations are placed in the respective cells.

This content supply system ex100 is connected to apparatuses such as Internet ex101, an Internet service provider ex102, a telephone network ex104, as well as a computer ex111, a Personal Digital Assistant (PDA) ex112, a camera ex113, a cell phone ex114 and a cell phone with a camera ex115 via the cell sites ex107~ex110.

However, the content supply system ex100 is not limited to the configuration shown in Fig. 35 and may be connected to a combination of any of them. Also, each apparatus may be connected directly to the telephone network ex104, not through the cell sites ex107~ex110.

The camera ex113 is an apparatus capable of shooting video such as a digital video camera. The cell phone ex114 may be a cell phone of any of the following system: a Personal Digital Communications (PDC) system, a Code Division Multiple Access (CDMA) system, a Wideband-Code Division Multiple Access (W-CDMA) system or a Global System for Mobile Communications (GSM) system, a Personal Handyphone System (PHS) or the like.

A streaming server ex103 is connected to the camera ex113 via the telephone network ex104 and also the cell site ex109, which realizes a live distribution or the like using the camera ex113 based on the coded data transmitted from the user. Either the camera ex113 or the server which transmits the data may code the data. Also, the picture data shot by a camera ex116 may be transmitted to the streaming server ex103 via the computer ex111. In this case, either the camera ex116 or the computer ex111 may code the picture data. An LSI ex117 included in the computer ex111 or the camera ex116 actually performs coding processing. Software for coding and decoding pictures may be integrated into any type of storage medium (such as a CD-ROM, a flexible disk and a hard disk) that is a recording medium which is readable by the computer ex111 or the like. Furthermore, a cell phone with a camera ex115 may transmit the picture data. This picture data is the data encoded by the LSI included in the cell phone ex115.

The content supply system ex100 encodes contents (such as a music live video) shot by a user using the camera ex113, the camera ex116 or the like in the same way as shown in the above-mentioned embodiments and transmits them to the streaming server ex103, while the streaming server ex103 makes stream distribution of the content data to the clients at their requests. The clients include the computer ex111, the PDA ex112, the camera ex113, the cell phone ex114 and so on capable of decoding the above-mentioned encoded data. In the content supply system ex100, the clients can thus receive and reproduce the encoded data, and can further receive, decode and reproduce the data in real time so as to realize personal broadcasting.

When each device in this system performs coding or decoding, the picture coding method or the picture decoding method shown in the above-mentioned embodiments can be used.

A cell phone will be explained as an example of the device.

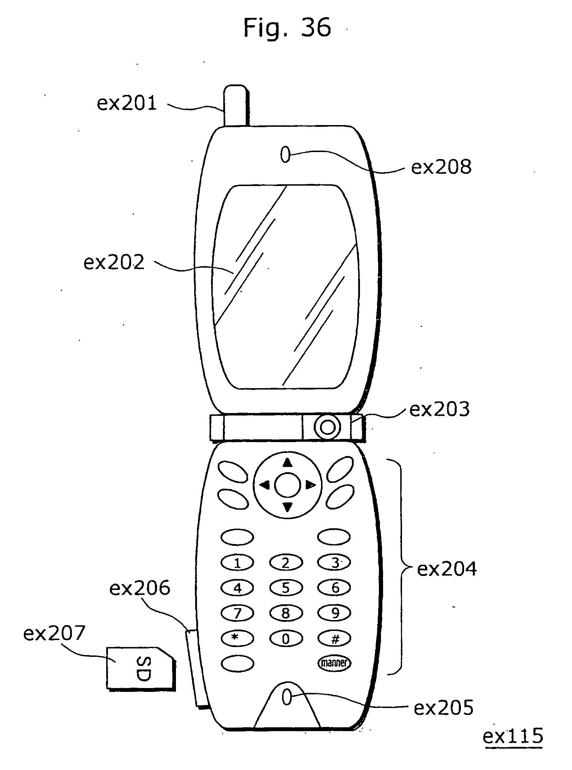

Fig. 36 is a diagram showing the cell phone ex115 using the motion vector estimation method, the motion vector coding method and the motion vector decoding method described in the above embodiments. The cell phone ex115 has an antenna ex201 for communicating with the cell site ex110 via radio waves, a camera unit ex203 such as a CCD camera capable of shooting moving and still pictures, a display unit ex202 such as a liquid crystal display for displaying the data such as decoded pictures and the like shot by the camera unit ex203 or received by the antenna ex201, a body unit including a set of operation keys ex204, a voice output unit ex208 such as a speaker for outputting voice, a voice input unit ex205 such as a microphone for inputting voice, a storage medium ex207 for storing coded or decoded data such as data of moving or still pictures shot by the camera, data of received e-mails and that of moving or still pictures, and a slot unit ex206 for attaching the storage medium ex207 to the cell phone ex115. The storage medium ex207 stores in itself a flash memory element, a kind of Electrically Erasable and Programmable Read Only Memory (EEPROM) that is a' nonvolatile memory electrically erasable from and rewritable to a plastic case such as an SD card.

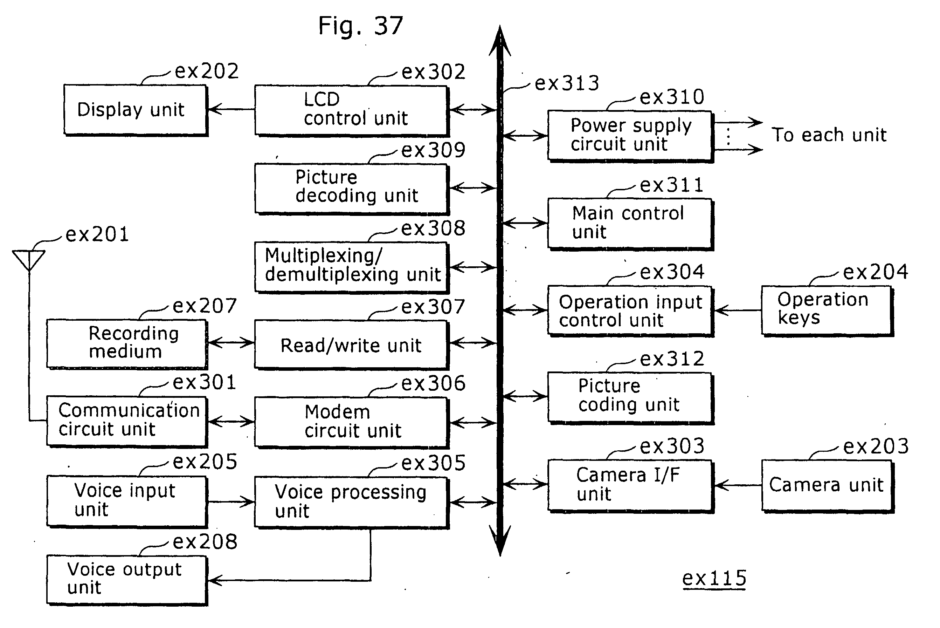

Furthermore, the cell phone ex115 will be explained with reference to Fig. 37. In the cell phone ex115, a main control unit ex311, designed in order to control overall each unit of the main body which contains the display unit ex202 as well as the operation keys ex204, is connected mutually to a power supply circuit unit ex310, an operation input control unit ex304, a picture coding unit ex312, a camera interface unit ex303, an LCD (Liquid Crystal Display) control unit ex302, a picture decoding unit ex309, a multiplexing/demultiplexing unit ex308, a read/write unit ex307, a modem circuit unit ex306 and a voice processing unit ex305 via a synchronous bus ex313.

When a call-end key or a power key is turned ON by a user's operation, the power supply circuit unit ex310 supplies respective units with power from a battery pack so as to activate the camera attached digital cell phone ex115 as a ready state.

In the cell phone ex115, the voice processing unit ex305 converts the voice signals received by the voice input unit ex205 in conversation mode into digital voice data under the control of the main control unit ex311 including a CPU, ROM and RAM, the modem circuit unit ex306 performs spread spectrum processing of the digital voice data, and the communication 'circuit unit ex301 performs digital-to-analog conversion and frequency transform of the data, so as to transmit it via the antenna ex201. Also, in the cell phone ex115, the communication circuit unit ex301 amplifies the data received by the antenna ex201 in conversation mode and performs frequency transform and analog-to-digital conversion to the data, the modem circuit unit ex306 performs inverse spread spectrum processing of the data, and the voice processing unit ex305 converts it into analog voice data, so as to output it via the voice output unit ex208.

Furthermore, when transmitting an e-mail in data communication mode, the text data of the e-mail inputted by operating the operation keys ex204 of the main body is sent out to the main control unit ex311 via the operation input control unit ex304. In the main control unit ex311, after the modem circuit unit ex306 performs spread spectrum processing of the text data and the communication circuit unit ex301 performs digital-to-analog conversion and frequency transform for the text data, the data is transmitted to the cell site ex110 via the antenna ex201.

When picture data is transmitted in data communication mode, the picture data shot by the camera unit ex203 is supplied to the picture coding unit ex312 via the camera interface unit ex303. When it is not transmitted, it is also possible to display the picture data shot by the camera unit ex203 directly on the display unit ex202 via the camera interface unit ex303 and the LCD control unit ex302.

The picture coding unit ex312, which includes the picture coding apparatus as explained in the present invention, compresses and encodes the picture data supplied from the camera unit ex203 using the coding method applied by the picture coding apparatus as shown in the above-mentioned embodiments so as to transform it into encoded picture data, and sends it out to the multiplexing/demultiplexing unit ex308.

The multiplexing/demultiplexing unit ex308 multiplexes the encoded picture data supplied from the picture coding unit ex312 and the voice data supplied from the voice processing unit ex305 using a predetermined method, then the modem circuit unit ex306 performs spread spectrum processing of the multiplexed data obtained as a result of the multiplexing, and lastly the communication circuit unit ex301 performs digital-to-analog conversion and frequency transform of the data for the transmission via the antenna ex201.

As for receiving data of a moving picture file which is linked to a Web page or the like in data communication mode, the modem circuit unit ex306 performs inverse spread spectrum processing of the data received from the cell site ex110 via the antenna ex201, and sends out the multiplexed data obtained as a result of the inverse spread spectrum processing.

In order to decode the multiplexed data received via the antenna ex201, the multiplexing/demultiplexing unit ex308 separates the multiplexed data into an encoded stream of picture data and that of voice data, and supplies the encoded picture data to the picture decoding unit ex309 and the voice data to the voice processing unit ex305 respectively via the synchronous bus ex313.

Next, the picture decoding unit ex309, including the picture decoding apparatus as explained in the above-mentioned invention, decodes the encoded stream of picture data using the decoding method corresponding to the coding method as shown in the above-mentioned embodiments to generate reproduced moving picture data, and supplies this data to the display unit ex202 via the LCD control unit ex302, and thus the picture data included in the moving picture file linked to a Web page, for instance, is displayed. At the same time, the voice processing unit ex305 converts the voice data into analog voice data, and supplies this data to the voice output unit ex208, and thus the voice data included in the moving picture file linked to a Web page, for instance, is reproduced.

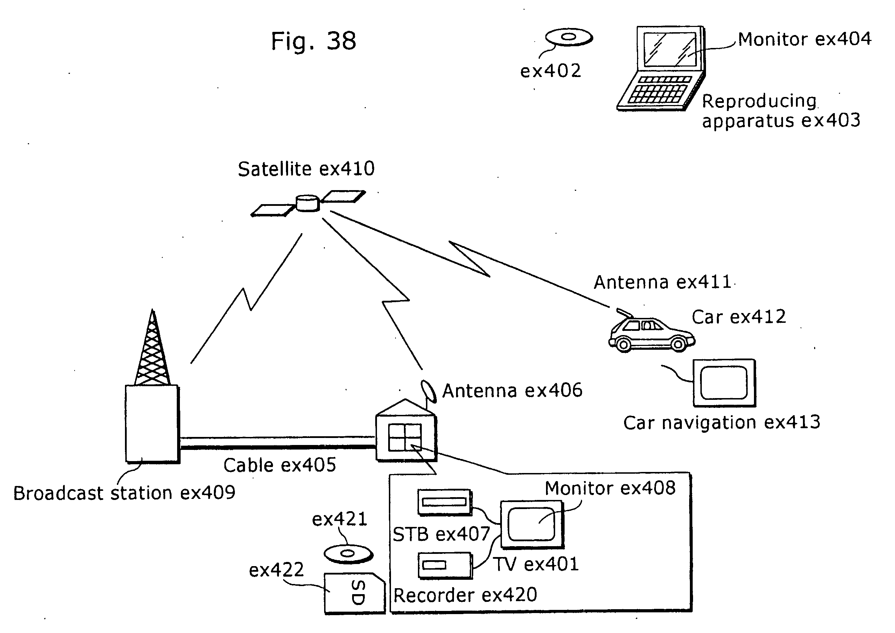

The present invention is not limited to the above-mentioned system as such ground-based or satellite dig.ital broadcasting has been in the news lately and at least either the picture coding apparatus or the picture decoding apparatus described in the above-mentioned embodiments can be incorporated into a digital broadcasting system as shown in Fig. 38. More specifically, an encoded stream of voice information is transmitted from a broadcasting station ex409 to or communicated with a broadcast satellite ex410 via radio waves. Upon receipt of it, the broadcast satellite ex410 transmits radio waves for broadcasting. Then, a home-use antenna ex406 with a satellite broadcast reception function receives the radio waves, and a television (receiver) ex401 or a STB (Set Top Box) ex407 decodes the encoded stream for reproduction. The picture decoding apparatus as shown in the above-mentioned embodiment can be implemented in the reproducing apparatus ex403 for reading out and decoding the coded stream stored in a storage medium ex402 that is a recording medium such as a CD and a DVD. In this case, the reproduced voice signals are displayed on a monitor ex404. It is also conceivable to implement the picture decoding apparatus in the set top box ex407 connected to a cable ex405 for a cable television or the antenna ex406 for satellite and/or ground-based broadcasting so as to reproduce them on a monitor ex408 of the television ex401. The picture decoding apparatus may be incorporated into the television, not in the set top box. Also, a car ex412 having an antenna ex411 can receive signals from the satellite ex410 or the cell site ex107 for reproducing moving pictures on a display device such as a car navigation system ex413 set in the car ex412.

Furthermore, the picture coding apparatus as shown in the above-mentioned embodiments can encode picture signals and record them on a recording medium. As a concrete example, a recorder ex420 such as a DVD recorder for recording picture signals on a DVD disk ex421, a disk recorder for recording them on a hard disk can be cited. They can be stored on an SD card ex422. If the recorder ex420 includes the picture decoding apparatus as shown in the above-mentioned embodiments, the picture signals stored on the DVD disk ex421 or the SD card ex422 can be reproduced for display on the monitor ex408.

As for the structure of the car navigation system ex413, the structure without the camera unit ex203, the camera interface unit ex303 and the picture coding unit ex312, out of the components shown in Fig. 37, is conceivable. The same applies for the computer ex111, the television (receiver) ex401 and others.

In addition, three types of implementations can be conceived for a terminal such as the above-mentioned cell phone ex114; a sending/receiving terminal implemented with both an encoder and a decoder, a sending terminal implemented with an encoder only, and a receiving terminal implemented with a decoder only.

As described above, it is possible to use the motion vector estimation method, the coding method and the decoding method described in the above-mentioned embodiments for any of the above-mentioned apparatuses and systems, and by using these methods, the effects described in the above-mentioned embodiments can be obtained.

Also, the present invention is not limited to the above-mentioned embodiments and a wide range of variations or modifications within the scope of the following claims are possible.

**Industrial Applicability**

The motion vector estimation method according to the present invention is practical as a moving picture coding apparatus for coding a moving picture, as a system comprising the apparatus, for example, a content supply system and a digital broadcasting system for supplying contents such as digital works.

**Claims**

1. A motion vector estimation method for estimating a motion vector indicating a displacement from another picture, for a block in a picture which constitutes a moving picture, the method comprising:

   a first candidate generation step of generating, for the current block to be estimated, a first motion vector candidate based on a first reference picture;
   a second candidate generation step of generating, for the current block, a second motion vector candidate based on a second reference picture;
   an interpolation step of generating an interpolation predictive block by performing interpolation on each pixel value of each pixel in a first block for prediction in the first reference picture and each pixel value of each pixel in a second block for prediction in the second reference picture, said first block being indicated by the first motion vector candidate, said second block being indicated by the second motion vector candidate, said each pixel in the first block corresponding to said each pixel in the second block; a calculation step of calculating an evaluation value that is based on a difference between each pixel value of each pixel in the interpolation predictive block and each pixel value of each pixel in the current block, said each pixel in the interpolation predictive block corresponding to said each pixel in the current block; a selection step of selecting one first motion vector out of the plurality of the first motion vector candidates generated in the first candidate generation step, and selecting one second motion vector out of a plurality of second motion vector candidates generated in the second candidate generation step, based on the evaluation value; and

an estimation step of estimating, for the current block, i) the selected first motion vector candidate, as a first motion vector, based on the first reference picture, and ii) the selected second motion vector candidate, as a second motion vector, based on the second reference picture.

2. The motion vector estimation method according to Claim 1,

wherein in the selection step, one first motion vector candidate and one second motion vector candidate are selected respectively, said first and second motion vector candidates, based on which the smallest evaluation value is obtained.

3. The motion vector estimation method according to Claim 1 or Claim 2,

wherein in the second candidate generation step, the second motion vector candidate is generated by performing scaling on the first motion vector candidate in proportion to display time differences which are obtained respectively for the first and second reference pictures on the basis of a picture including the current block.

4. The motion vector estimation method according to Claim 3,

wherein in the second candidate generation step, a picture is selected as the second reference picture, said picture whose display time difference obtained on the basis of the current block is longer than the display time difference of the first reference picture.

5. The motion vector estimation method according to Claim 3,

wherein in the first candidate generation step, a picture whose display time is earlier than the display time of the current block is selected as the first reference picture.

6. The motion vector estimation method according to Claim 1 or Claim 2,

wherein in the first candidate generation step, a picture whose display time is earlier than the display time of a picture including the current block is selected as the first reference picture, and

in the second candidate generation step, a picture whose display time is earlier than the display time of the picture including the current block is selected as the second reference picture.

7. The motion vector estimation method according to Claim 1 or Claim2,

wherein in the first candidate generation step, a picture whose display time is later than the display time of the picture including the current block is selected as the first reference picture, and

in the second candidate generation step, a picture whose display time is later than the display time of the picture including the current block is selected as the second reference picture.

8. The motion vector estimation method according to Claim 1 or Claim 2,

wherein in the second candidate generation step, i) when a picture whose display time is earlier than the display time of a picture including the current block is selected as the first reference picture, a picture whose display time is later than the display time of the picture including the current block is selected as the second reference picture; ii) when a picture whose display time is later than the display time of the picture including the current block is selected as the first reference picture, a picture whose display time is earlier than the display time of the picture including the current block is selected as the second reference picture.

9. A motion vector estimation method for estimating a motion vector indicating a displacement from another picture, for a block in a picture which constitutes a moving picture, the method comprising:

a first candidate generation step of generating, for the current block to be estimated, a first motion vector candidate based on a first reference picture;

a scaling vector generation step of generating, for the current block, a scaling vector based on the second reference picture by performing scaling on the first motion vector candidate in proportion to display time differences which are obtained respectively for the first and second reference pictures on the basis of a picture including the current block;

a first interpolation step of generating a first interpolation predictive block by performing interpolation on each pixel value of each pixel in a first block for prediction in the first reference picture and each pixel value of each pixel in a second block for prediction in the second reference picture, said first block being indicated by the first motion vector candidate, said second block being indicated by the scaling vector, and said each pixel in the first block corresponding to said each pixel in the second block;

a first calculation step of calculating an evaluation value based on a difference between each pixel value of each pixel in the first interpolation predictive block and each pixel value of each pixel in the current block, said each pixel value in the first interpolation predictive block corresponding to said each pixel in the current block;

a first estimation step of estimating, for the current block, the first motion vector candidate out of a plurality of first motion vector candidates generated in the first candidate generation step, as a first motion vector, based on the first reference picture, said first motion vector candidate, based on which the smallest evaluation value is calculated in the first calculation step;

a second candidate generation step of generating, for the current block, a second motion vector candidate based on a second reference picture;

a second interpolation step of generating a second interpolation predictive block by performing interpolation on each pixel value of each pixel in a third block for prediction in the first reference picture and each pixel value of each pixel in a fourth block for prediction in the second reference picture, said third block being indicated by the first motion vector, said fourth block being indicated by the second motion vector candidate, and said each pixel in the third block corresponding to said each pixel in the fourth block;

a second calculation step of calculating an evaluation value based on a difference between each pixel value of each pixel in the second interpolation predictive block and each pixel value of each pixel in the current block, said each pixel in the second interpolation predictive block corresponding to said each pixel in the current block; and

a second estimation step of estimating, for the current block, the second motion vector candidate out of a plurality of second motion vector candidates generated in the second candidate generation step, as a second motion vector, based on the second reference picture, said second motion vector candidate, based on which the smallest evaluation value is calculated in the second calculation step.

10. A motion vector coding method for coding a motion vector indicating a displacement from another picture, for a block in a picture which constitutes a moving picture, the method comprising:

a motion vector estimation step of estimating first and second motion vectors using the motion vector estimation method according to Claim 1 or Claim 2; and
a coding step of coding respectively the first and second motion vectors.

11. A motion vector coding method for coding a motion vector indicating a displacement from another picture, for a block in a picture which constitutes a moving picture, the method comprising:

a reading out step of reading out first and second reference pictures from a storage unit having a first area in which a picture is stored together with information on a display time of the picture and a second area in which other pictures are stored;
a motion vector estimation step of estimating the first and second motion vectors with reference to the first and second reference pictures using the motion vector estimation method according to Claim 1 or Claim 2;
a judgment step of judging whether or not at least one of the first and second reference pictures is read out from the second area; and
a coding step of coding respectively the first and second motion vectors, when it is judged, in the judgment step, that at least one of the first and second reference pictures is read out from the second area.

12. A motion vector estimating apparatus for estimating a motion vector indicating a displacement from another picture, for a block in a picture which constitutes a moving picture, the apparatus comprising:

a first candidate generation unit operable to generate, for the current block to be estimated, a first motion vector candidate based on a first reference picture;
a second candidate generation unit operable to generate, for the current block, a second motion vector candidate based on a second reference picture;
an interpolation unit operable to generate an interpolation predictive block by performing interpolation on each pixel value of each pixel in a first block for prediction in the first reference picture and each pixel value of each pixel in a second block for prediction in the second reference picture, said first block being indicated by the first motion vector candidate, said second block being indicated by the second motion vector candidate, and said each pixel in the first block corresponding to said each pixel in the second block;

a calculation unit operable to calculate an evaluation value based on a difference between each pixel value of each pixel in the interpolation predictive block and each pixel value of each pixel in the current block, said each pixel in the interpolation predictive block corresponding to said each pixel in the current block;

a selection unit operable to select one first motion vector candidate out of the plurality of the first motion vector candidates generated by the first candidate generation unit, and select one second motion vector candidate out of a plurality of second motion vector candidates generated by the second candidate generation unit, said first and second motion vectors, based on which the smallest evaluation value is obtained; and

an estimation unit operable to estimate, for the current block, i) the selected first motion vector candidate, as a first motion vector, based on the first reference picture, and ii) the selected second motion vector candidate, as a second motion vector, based on the second reference picture.

13. A motion vector coding apparatus for coding a motion vector indicating a displacement generated from another picture, for a block in a picture which constitutes a moving picture, the apparatus comprising:

   the motion vector estimating apparatus according to Claim 12; and
   a coding unit operable to code respectively first and second motion vectors estimated by the motion vector estimating apparatus.

14. A moving picture coding apparatus for coding a picture which constitutes a moving picture, the apparatus comprising:

   the motion vector coding apparatus according to Claim 13; and
   a picture coding unit operable to code blocks corresponding to first and second motion vectors coded by the motion vector coding apparatus.

15. A program causing a computer to execute a motion vector estimation method for estimating a motion vector indicating a displacement from another picture, for a block in a picture which constitutes a moving picture, the program comprising:

   a first candidate generation step of generating, for the current block to be estimated, a first motion vector candidate based on a first reference picture;
   a second candidate generation step of generating, for the current block, a second motion vector candidate based on a second reference picture;
   an interpolation step of generating an interpolation predictive block by performing interpolation on each pixel value of each pixel in a first block for prediction in the first reference picture and each pixel value of each pixel in a second block for prediction in the second reference picture, said first block being indicated by the first motion vector candidate, said second block being indicated by the second motion vector candidate, and said each pixel in the first block corresponding to said each pixel in the second block;
   a calculation step of calculating an evaluation value based on a difference between each pixel value of each pixel in the interpolation predictive block and each pixel value of each pixel in the current block, said each pixel in the interpolation predictive block corresponding to said each pixel in the current block;
   a selection step of selecting one first motion vector candidate out of a plurality of first motion vector candidates generated in the first candidate generation step, and one second motion vector candidate out of a plurality of second motion vector candidates generated in the second candidate generation step, said first and second motion vector candidates, based on which the. smallest evaluation value is obtained; and
   an estimation step of estimating, for the current block, i) the selected first motion vector, as a first motion vector, based on the first reference picture, and ii) the selected second motion vector, as a second motion vector, based on the second reference picture.

16. A program causing a computer to execute a motion vector coding method for coding a motion vector indicating a displacement from another picture, for a block in a picture which constitutes a moving picture, the program comprising:

   the steps included in the program according to Claim 15; and
   a coding step of coding respectively the first and second motion vectors.

17. A storage medium on which the program according to Claim 16 is stored.

Fig. 1

# Fig. 2

Fig. 3

800

Bs

Variable length coding unit 806

Motion vector scaling unit 807

MVd
810
MVs

Er

Picture decoding unit 805

Picture coding unit 804

Res
809

Dr 808

Pre

MV1

MV2 803

Motion compensation unit

Rc

MV1,MV2 812

Rf1

Rf2

Multi-frame buffer 801

Img

Motion estimation unit 802

Rf1,Rf2

811

## Fig. 4

## Fig. 5

# Fig. 6

EP 1 489 848 A1

# Fig. 7

Coded frame signal  Bsf9

Coded block signal

Bsb9

Coded first motion vector signal

Bs1

Coded differential vector signal

Bsd

## Fig. 8

EP 1 489 848 A1

Fig. 9

EP 1 489 848 A1

Fig. 10A

Rf2    Rf1    Tf

Frame | Frame | Frame | Frame | Current frame | Frame | Frame | Frame | Frame

→ Time

Fig. 10B

Tf    Rf1    Rf2

Frame | Frame | Frame | Frame | Current frame | Frame | Frame | Frame | Frame

→ Time

Fig. 10C

Rf2    Tf    Rf1

Frame | Frame | Frame | Frame | Current frame | Frame | Frame | Frame | Frame

→ Time

## Fig. 11

EP 1 489 848 A1

Fig. 12

EP 1 489 848 A1

## Fig. 13

## Fig. 14

```
                    ( Start )
                        │
    ┌───────────────────┤
    │                   ▼
    │   ┌──────────────────────────────┐
    │   │ Generate first motion vector │  ⟋S300
    │   │ candidate MVC1 and second    │
    │   │ motion vector candidate MVC2 │
    │   └──────────────────────────────┘
    │                   │
    │                   ▼
    │   ┌──────────────────────────────┐
    │   │   Obtain predictive blocks   │  ⟋S302
    │   │   PB1 and PB2                │
    │   └──────────────────────────────┘
    │                   │
    │                   ▼
    │   ┌──────────────────────────────┐
    │   │ Generate interpolation       │  ⟋S304
    │   │ predictive block PB0 through │
    │   │ interpolation processing     │
    │   └──────────────────────────────┘
    │                   │
    │                   ▼
    │   ┌──────────────────────────────┐
    │   │     Obtain current block     │  ⟋S306
    │   └──────────────────────────────┘
    │                   │
    │                   ▼
    │   ┌──────────────────────────────┐
    │   │ Current block −               │  ⟋S308
    │   │ interpolation predictive      │
    │   │ block PB0                     │
    │   │ =Prediction error block RB0   │
    │   └──────────────────────────────┘
    │                   │
    │                   ▼
    │   ┌──────────────────────────────┐
    │   │   Calculate prediction error │  ⟋S310
    │   │   evaluation value           │
    │   └──────────────────────────────┘
    │                   │
    │                   ▼
    │  N ╱Calculated for all the combinations╲  ⟋S312
    └───╲   made of MVC1 and MVC2           ╱
         ╲──────────────────────────────╱
                        │Y
                        ▼
        ┌──────────────────────────────┐
        │ Determine MVC1 and MVC2      │  ⟋S314
        │ based on which prediction    │
        │ error evaluation value is    │
        │ the smallest as MV1 and MV2  │
        └──────────────────────────────┘
                        │
                        ▼
        ┌──────────────────────────────┐
        │ Code motion vectors MV1 and  │  ⟋S316
        │ MV2                          │
        └──────────────────────────────┘
                        │
                        ▼
                    ( End )
```

# Fig. 15

Bs1      336    Er      335     Dr        Di

Variable length decoding unit

Picture decoding unit

339

MV1

Pre

MV2

Motion compensation unit

Rf1

Multi-frame buffer

Rf2

333

331

300B

# Fig. 16

## Fig. 17

EP 1 489 848 A1

Fig. 18

## Fig. 19

Coded frame signal  Bsf2

| | Coded block signal | |
|---|---|---|

Bsb2

| | Coded first motion vector signal | |
|---|---|---|

Bs1

Fig. 20

Bs2       436    Er       435      Dr        Di

| Variable length decoding unit | → | Picture decoding unit | → (+) → |

439

MV1

437

| Motion vector scaling unit |

Pre

MV2

| Motion compensation unit | ← Rf1 ← | Multi-frame buffer |
| | ← Rf2 ← | |

433             431

400B

Fig. 21

## Fig. 22

EP 1 489 848 A1

Fig. 23A

Fig. 23B

# Fig. 24

EP 1 489 848 A1

Fig. 25

Coded frame signal Bsf3

| | Coded block signal | | Coded block signal | |
|---|---|---|---|---|

Bsb3

Bsb4

| Code signal (=2) | Coded first motion vector signal | Coded differential vector signal | |
|---|---|---|---|

| Code signal (=1) | Coded first motion vector signal | |
|---|---|---|

Bsn2      Bs1      Bsd

Bsn1      Bs1

EP 1 489 848 A1

Fig. 26

Fig. 27

EP 1 489 848 A1

Fig. 28

Long-term buffer | Short-term buffer

101ℓ          101s

Multi-frame buffer

101

## Fig. 29A

f𝑙2 f𝑙1    fs1    fs2    fs3    fs4    fs5    fs6    fs7

Current frame

Long-term buffer | Short-term buffer

Order

Time

## Fig. 29B

f𝑙2 f𝑙1    fs1    fs2    fs3    fs4    fs5    fs6    fs7

Current frame

Long-term buffer | Short-term buffer

Order

Time

## Fig. 30

# Fig. 31

```
                    ┌─────────┐
                    │  Start  │
                    └────┬────┘
                         │
                         ▼                    S101
        ╱───────────────────────────────╲
       ╱  Is at least one of Rf1 and      ╲  N
       ╲  Rf2 read out from long-term     ╱────────────┐
        ╲           buffer?              ╱             │
         ╲─────────────┬───────────────╱              │
                       │ Y      S103                  │ S102
                       ▼                              ▼
            ┌──────────────────────┐      ┌──────────────────────┐
            │  Process MVs as MV1  │      │  Generate MVs by      │
            │                      │      │  scaling MV1          │
            └──────────┬───────────┘      └───────────┬──────────┘
                       │                              │
                       ▼◄─────────────────────────────┘
                                       S104
            ┌──────────────────────┐
            │    Mvd=MV2-MVs       │
            └──────────┬───────────┘
                       │           S105
                       ▼
            ┌──────────────────────┐
            │      Code MV1        │
            └──────────┬───────────┘
                       │           S106
                       ▼
            ┌──────────────────────┐
            │      Code Mvd        │
            └──────────┬───────────┘
                       │
                       ▼
                 ┌─────────┐
                 │   End   │
                 └─────────┘
```

## Fig. 32

EP 1 489 848 A1

## Fig. 33

Start

Decode MV1 — S201

Decode MVd — S202

Is at least one of Rf1 and Rf2 read out from long-term buffer? — S203

N

Y

Process MVs as MV1 — S205

Generate MVs by scaling MV1 — S204

MV2=MVd+MVs — S206

End

Fig. 34A

Se

Tr

FD1

Fig. 34B

FD

F

FD

FD1

Fig. 34C

FDD

Cs

FD

# Fig. 35

Streaming server ex103

LSI ex117

Camera ex116

Computer ex111

ex107

Internet ex101

Telephone network ex104

ex108

PDA ex112

ex109

Camera ex113

Internet service provider ex102

Cell phone ex115

ex110

Cell phone ex114

ex100

EP 1 489 848 A1

## Fig. 36

ex201

ex208

ex202

ex203

ex204

ex206

ex207

SD

manner

ex205

ex115

## Fig. 37

ex202 Display unit

ex302 LCD control unit

ex313

ex310 Power supply circuit unit — To each unit

ex309 Picture decoding unit

ex311 Main control unit

ex201

ex308 Multiplexing/ demultiplexing unit

ex207 Recording medium

ex307 Read/write unit

ex304 Operation input control unit

ex204 Operation keys

ex301 Communication circuit unit

ex306 Modem circuit unit

ex312 Picture coding unit

ex205 Voice input unit

ex305 Voice processing unit

ex303 Camera I/F unit

ex203 Camera unit

ex208 Voice output unit

ex115

EP 1 489 848 A1

Fig. 38

**EP 1 489 848 A1**

<table>
<tr><td colspan="2">**INTERNATIONAL SEARCH REPORT**</td><td>International application No.<br>PCT/JP03/03060</td></tr>
</table>

| A. CLASSIFICATION OF SUBJECT MATTER |
|---|
| Int.Cl⁷ H04N7/32 |

According to International Patent Classification (IPC) or to both national classification and IPC

| B. FIELDS SEARCHED |
|---|
| Minimum documentation searched (classification system followed by classification symbols)<br>Int.Cl⁷ H04N7/24-7/68 |

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 5-41861 A (Toshiba Corp.),<br>19 February, 1993 (19.02.93),<br>Page 10, left column, line 15 to page 14, right column, line 17; Figs. 17 to 27<br>& US 5317397 A & US 5424779 A<br>& US 5467136 A & US 5541661 A<br>& US 5647049 A & US 5986713 A<br>& US 6005627 A & US 6016162 A | 1-17 |
| Y | Yasuyuki NAKAJIMA, "Interlaca Dogazo no Konoritsu Ugoki Hosho Yosoku Hoshiki SVMC", Information Processing Society of Japan Kenkyu Hokoku, 24 June, 1994 (24.06.94), Vol.94, No.53, pages 9 to 16 | 1-17 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>17 June, 2003 (17.06.03) | Date of mailing of the international search report<br>01 July, 2003 (01.07.03) |
|---|---|
| Name and mailing address of the ISA/<br>Japanese Patent Office | Authorized officer |
| Facsimile No. | Telephone No. |

Form PCT/ISA/210 (second sheet) (July 1998)

EP 1 489 848 A1

## INTERNATIONAL SEARCH REPORT

| | International application No. |
|---|---|
| | PCT/JP03/03060 |

C (Continuation). DOCUMENTS CONSIDERED TO BE RELEVANT

| Category* | Citation of document, with indication, where appropriate, of the relevant passages | Relevant to claim No. |
|---|---|---|
| Y | Shuji INOUE, Takekata GYO, "Interlace Gazo ni okeru Ugoki Hosho Yosoku Hoshiki no Kento", Information Processing Society of Japan Kenkyu Hokoku, 24 June, 1994 (24.06.94), Vol.94, No.53, pages 25 to 32 | 1-17 |
| Y | JP 6-253291 A (American Telephone and Telegraph Co.), 09 September, 1994 (09.09.94), Page 5, left column, lines 12 to 31 & US 5151784 A & EP 511778 A2 | 1-17 |

Form PCT/ISA/210 (continuation of second sheet) (July 1998)